# EUROPEAN PATENT SPECIFICATION

(11) **EP 2 157 849 B1**
(45) Date of publication and mention of the grant of the patent: **15.07.2015**
(21) Application number: 07784571.7
(22) Date of filing: 21.05.2007
(51) Int. Cl.: A01K 29/00

(54) **FUNCTION-BASED HABITAT DESIGN METHOD**
FUNKTION-BASIERTES VERFAHREN ZUM ENTWURF EINES HABITATS
PROCÉDÉ DE CONCEPTION D'HABITAT FONDÉ SUR DES FONCTIONS

(43) Date of publication of application: 03.03.2010
(73) Proprietor: Breedlove, Benjamin Wilbur, 0002 Pretoria (ZA)
(72) Inventor: Breedlove, Benjamin Wilbur, 0002 Pretoria (ZA)
(74) Representative: Baur & Weber Patentanwälte
(86) International application number: PCT/ZA2007/000028
(87) International publication number: WO 2008/144779

(56) References cited:
- US-A1- 2001 000 867
- US-A1- 2003 005 623
- US-A1- 2007 204 800
- US-B1- 7 026 941

## Description

The present invention relates to a function-based habitat design method and to means for performing the method. The invention also relates to a function-based habitat construction method.

A method which is used by the United States Fish and Wildlife Service is known by the acronym HEP, meaning Habitat Evaluation Procedure (USFWS Habitat Evaluation Procedure Handbook (870 FW1.9A)). It provides a protocol for the evaluation of an existing habitat and assessing its utility for wildlife purposes. That procedure may be compared with a bookkeeping system. It employs the guilding concept to be explained further below as a means of grouping animals which tend to occupy a given habitat. The procedure determines to what extent the minimum requirements for a certain guild are satisfied and expresses these in terms of an HSI, meaning Habitat Suitability Index.

This represents an evaluation of natural systems of habitat against hypothetical optimum conditions for various animals occurring in such habitat. It sets out the needs for those animals but makes no recommendations on how to improve the status quo.

Procedures exist for characterising the locations, configuration and/or sizing of nature reserves, but serve solely for delimiting and isolating existing natural systems from humans and their activities (Scott & Sullivan, Environmental Management 26, suppl. 1 537-553 (2000) Springer Verlag).

A Focal Species Approach has been described for the determination of spatial-functional configuration for sensitive species (Lambeck, Robert J., Conservation Biology 11 (4) 849-856 (1997), Freudenberger (2001) Bush for the Birds: Biodiversity enhancement guidelines for the Saltshaker Project, CSIRO Sustainable Ecosystems, Canberra; Lesley Brooker, Landscape and Urban Planing 60 (2002) 185-210; www.elsevier.com/locate/landurbplan). That approach recognises a need to inform and induce landowning humans to practice social-ecological concepts, but again limited to and directed at sizing and fencing off remnant forest to prevent use by domestic animals, to allow natural recovery of system structure and function without active human intervention.

A variation on the above approach (Sanderson, Redford et al; Landscape and Urban Planning 58 (2002) 41-56; Coppolillo, Gomez et al. Biol. Conservation 115 (2004) 419-430) uses a landscape species approach and uses a suite of organisms as a basis for landscape or reserve planning.

A functional resource-based approach to habitat has also been proposed (Dennis, Shreeve, et al., OIKOS102:2 (2003).

In line with modern ecological consciousness, a trend has evolved to reverse ecological damage done to environments due to human exploitation or other interference. This is generally done by concentrating on quite specific forms of past damage, for example efforts at restoring previously drained wetlands or restoring riverine environments damaged by encroachment of alien vegetation, silting up due to upstream human induced soil erosion. Another example would be attempts at replanting forests after previous destruction by lumber extraction.

A shortcoming of prior art methods has been a lack of a truly holistic approach and lack of adequate, correct and integrated consideration of all parameters which animals consider in their choice of and ability to use a terrain as their habitat.

By way of contrast, the present invention aims at overcoming shortcomings of the prior art and to optimise habitat functionality by a systematic assessment of potential habitat parameters and providing information and tools usable even by professionals having limited ecological knowledge and skills to produce optimised habitat features in or on a given terrain or development site in order to provide human occupants or future occupants or visitors with an improved nature experience and enjoyment. In other words, a method is aimed at which can achieve optimal habitat creation or improvement, even in close proximity to humans and their activities. Such method must be acceptable to the practicing professions responsible for designing, constructing and maintaining the built environment, where appropriate in close co-operation with laymen.

During the experimental stage leading, some years later, to the present invention, the present inventor announced in broad outlines the objectives of his research, without making an enabling disclosure of the invention (Breedlove, Ben W. et al, proceedings 4h International Urban Wildlife Symposium. Shaw et al. Eds. 2004, pp. 341-346).

Broadly speaking, the present invention provides a function-based habitat design method which comprises the combination of steps set out in claim 1.

In the following these various steps will be further explained and it will become clear how the invention attains its objects.

More specifically, the above is performed as set out in claim 2.

In this context it must be understood that the Terrain Features and Habitat Decision Units Map referred to in claim 2, depicts features bounding and containing inherent habitat determinants based on landscape and habitat function fundamentals. It is not a map of existing conditions or current vegetation cover types. Virtually all sites, including today's "natural areas" have been highly altered at one to many points in the past. Past land use change actions resulted in removal of cavities above and below ground and in local geology, at minimum. Current or extant vegetation patterns are a result of a combination of recent and ongoing forcing functions plus inherent and, therefore, long term drivers of vegetation cover and habitat potential. Inherent drivers include soil characteristics, aspect or exposure to sunlight, moisture regimes and geology among other stable long term perturbants or affectors determining natural system composition in the absence of human interference.

According to an important preferred feature of the invention, the method includes organising animal species into potential Design Animal Habitat Guilds as set out in claim 3.

The location, mapping and subsequent incorporation of spatial units containing (i) inherent natural system value determinants of habitat functionality and (ii) animal determined Habitat Decision Units into Design Animal Habitat Guild Habitat Pattern Maps is a unique requirement of this technique. These initial mappable features are aggregated based on (i) species habitat requirements and (ii) the consequent and subsequently determined Design Animal Habitat Guild Booleans, into spatial patterns bounding habitat. These bounded spatial patterns are the Habitat Pattern Maps for the Design Animal Habitat Guilds that are a follow-on and unique product of this technique.

Stated very simply, a habitat pattern map is a map of the bases for animals' reaction to landscape features based on determinants of and consequent locations of functional value to an animal(s). This type of map is unique in that habitat functional value, as determined by animals, determines the map features and their shape. Aggregation of these features based on animal habitat functional requirements determines/bounds habitat for that/those animal(s).

Typically, when designing at a habitat scale for animal species of conventional interest for lay persons, five to eight Design Animal Habitat Guilds are required to utilise all features listed in the Terrain Features and Habitat Decision Units Legend. A similar number is typically utilised to obtain total coverage of the area of design interest by the Design Animal Habitat Guild Habitat Pattern Map. Design at a smaller or finer spatial unit scale will require addition of Design Animal Habitat Guilds for the added scale of design interest.

According to the preferred method after data for each animal species listed in each Design Animal Habitat Guild Requisites Template have been compiled in the template, a "one line" summary statement of most efficacious or best criteria determining the design of optimal habitat is extracted from the compiled data, which summary statement applies to the entirety of the animal habitat guild and defines the habitat conditions for all animals in the guild in terms of design of optimal habitat conditions achievable having regard to terrain constraints and which summary statement is then used as a Boolean to create Habitat Pattern Maps that are specific to each Design Animal Habitat Guild.

This template is one of the core and unique elements of the design process. In it, three elements constituting functional habitat and constituting, therefore, a Function-based Habitat Design are linked for simplicity of efficacious application by other professions for the built environment, among others, and for the "non-built" but managed "natural" environment. The relationship formed in the template: (1) an animal species linked to (2) that species' habitat function best forcing optimal habitat linked to (3) the mapping unit for the terrain feature containing the habitat function, allows persons without habitat knowledge or applicable professional training to design functional habitat by using the design elements with which they are familiar. "Familiar design elements" in conventional use by other professions for the built and/or managed environment are primarily features of vegetation and/or vegetation associations and are known as "tree canopy," "grassland,' and other terms of convention or professional use. This linkage created by this Function-based Habitat Design technique among (1) the habitat related usage of this conventional mappable unit as viewed and known by other professions. (2) those vegetation species comprising this mappable unit that are also most closely associated with the habitat function that is also best for forcing design and habitat functionality within the mappable unit and (3) the guild of animals associated with the mappable units and the habitat functionality obtained therein, allows high levels of habitat functionality to be obtained by other designers for the built environment (i.e., landscape architects, architects, civil engineers) who do not have the detailed knowledge of habitat relationships and their application in space for service to user groups of animals that is typical of professional wildlife managers and those in the closely allied professions.

Preferably, the said Booleans are modified, applying best fit principles in order to generate a Design Animal Habitat Guild Habitat Pattern Map in which overlaps of the initial Booleans are eliminated. Preferably, for a selected Design Animal Habitat Guild a specific Habitat Pattern Map is created.

Preferably, a plurality of said habitat Pattern Maps are compiled within which the habitat requisites summarised in the Design Animal Habitat Guild Requisite Template are installed until at least threshold conditions for habitat or optimal habitat are reached or exceeded. The resulting absence of spatial overlap between the Habitat Pattern Maps or, stated differently, creation of area specific Design Animal Habitat Guild Habitat Pattern Map results in a simpler design process and in subsequent simpler habitat maintenance, assessment, management and improvement processes. The efficacy and simplicity of these follow-on activities are essential for acceptance, utility and success of the habitat design whether accomplished by specially trained and aware or by conventionally behaving maintenance organisations and by the similarly conventional or better comprehending design professionals for the built and managed environment(s).

Neither habitat quality nor habitat functionality is limited by having spatially explicit, non-overlapping, Design Animal Habitat Guild specific Habitat Pattern Maps. Animals in any one Design Animal Habitat Guild will also occur in one or more of the other habitat guilds and will obtain portions of their habitat requisites there. They will have one habitat guild with which they may be primarily associated and one to several habitat guilds with which they may or will have secondary and/or tertiary degrees of association. This fact of multiplicity of areas for an animal species' occurrence and varying degrees of fidelity of association with each of the areas adds an element of robustness to the design technique while retaining design and managerial simplicity.

It is important to appreciate that the method according to the invention is based entirely on an in-depth study of the decision making process performed by animals in their acceptance of portions of a terrain as part of their habitat.

Within the meaning of the present description habitat is defined as feeding, breeding, nesting and resting opportunities suitably juxtaposed in time and space for all life stages operating at or above Minimum Viable Population levels. According to this definition, habitat is an all or nothing entity. Habitat must provide all life requisites, when, where and as needed, for all life stages and for both sexes at or above requirements to support at least a Minimum Viable Population of the species at issue. Anything less is perhaps a component of habitat but it is not habitat.

The invention accordingly teaches producing a Terrain Features and Habitat Decision Units Features List for the project site plus for the habitat area of animals expected to use the site if optimal conditions were established and maintained both onsite and in the surrounding area, required to meet habitat criteria.

In a process flow, this action occurs in time synchrony with the production of the list of animal and plant species of interest for inclusion in the Function-based Habitat Design process. It is inserted at this point in the uni-linear treatment of process following reaching a point of completion of use of materials included in the design process flowing from creation of the listings of plant and animal species.

In the preferred method the aforesaid Habitat Pattern Maps are used as templates or patterns for planting vegetation species that are highly ranked for their habitat function support for the selected Design Animal Habitat Guilds. Likewise, the Habitat Pattern Maps are used as or as a basis for a Habitat Supplements Map for installing or constructing in the terrain features substituting for missing features of habitat.

Based on the aforegoing a Terrain Features and Habitat Decision Units Features List is prepared which comprises the map legend for the Terrain Features and Habitat Decision Units Features Map.

Terrain Features, for purposes of this technique, are inherent and visually discernable elements in the terrain. They are mappable units defined by soil types, soil moisture, slope, aspect, and other determinants of ultimate land capability in the absence of human linked forcing functions. Terrain features are not the currently observable vegetation patterns although vegetation patterns may, at points in time, be coincident with inherent terrain features.

Decision Units are animal determined features in the landscape where animals make habitat related decisions. A decision to move using a visually definable mappable terrain feature, feed, breed, nest or rest occurs at a mappable feature comprising an animal determined Decision Unit in the landscape.

The Terrain Features and Habitat Decision Units Map contains all terrain features and animal decision unit features comprising life requisites for animal species contained in the group of Design Animal Habitat Guilds used for a Function-based Habitat Design. The Design Animal Habitat Guild specific Habitat Pattern Map Booleans include those portions of the map features comprising habitat for the Design Animal Habitat Guild of interest.

From the aforegoing there may then follow the production of a Terrain Features and Habitat Decision Units Map which is a representation of baseline status in the terrain. It represents only extant site and vicinity features contained in functional habitat for the species comprising the Design Animal Habitat Guilds.

This, in turn, is preferably followed by the production of Design Animal Habitat Guild specific Habitat Pattern Maps, wherein Booleans are used to create Design Animal Habitat Guild specific Habitat Pattern Maps for each Design Animal Habitat Guild using the necessary features in the Terrain Features and Habitat Decision Units Map.

The resulting site specific compilation of Habitat Pattern Maps becomes a spatial template within which the habitat requisites summarised in the Design Animal Habitat Guild

Requisites Template are installed until threshold conditions for habitat or optimal habitat are reached or exceeded. Installation is essential (1) to meet the stipulations of the definition of habitat (and therefore to have habitat) and (2) to achieve habitat optimality (under conditions allowing or not allowing habitat design optimality). These are two qualitatively different goals. Installing habitat is the minimum step beyond attracting animals to a site from their habitat. Habitat Optimality occurs when habitat functionality per the habitat definition is reached and function density within that spatial unit has been optimised as measured by animal species diversity, population numbers and persistence of same through adverse conditions.

Design Animal Habitat Guild Specific Habitat Pattern Maps can represent the requisite conditions for habitat either in natural terrain or in the built environment. Features of the built environment are design elements for inclusion in the maps and the habitat represented in the maps.

Design Animal Habitat Guild Specific Habitat Pattern Maps are spatially non-overlapping for reasons mentioned previously. Overlap will occur in vegetation speciation, habitat functionality types and in animal species utilisation in many to most instances. The maps are templates or patterns within which the vegetation species contained in the Design Animal Habitat Guild specific Vegetation Planting Palettes that are highly ranked for their habitat function support for the Design Animal Habitat Guild, for which any particular habitat pattern map is intended, are planted. The maps serve far more as guidance and control tools for those humans having design installation, maintenance, assessment and habitat value optimisation responsibilities than for any animal related purposes once their design is complete. They are simplification tools for human actions and responsibilities related to achieving the design and its potential.

The aforegoing may, in turn, be followed by the production of a Habitat Supplements Map for each Design Animal Habitat Guild Specific Habitat Pattern Map.

Habitat Supplements are constructed features substituting for missing features of habitat. These missing features of habitat are typically cavities, ledges or other structures removed during land use alterations and are either slow to reoccur or unlikely to ever reoccur through natural means. They are critical features to add to a Function-based Habitat Design to assure habitat functionality and must be replaced using constructed features to avoid the time delay or improbability associated with their natural process for reoccurrence.

The invention teaches the provision of a large number of aids or tools to assist less specialised persons, including architects, landscape-designers and service providers in practising the invention, for example a Habitat Supplements Handbook which is a compilation of habitat supplements suited for use in architectural, landscape architectural and civil or other engineering structures and for insertion into natural environments.

The primary deliverable of the technique is a habitat design process based upon habitat functions associated with meeting the life requisites of animals. The technique considers the spatial, temporal and behavioural aspects of the delivery of these life requisites to the groups or guilds of animals of design interest. The technique requires professionals in animal habitat for insertion of the habitat requisites for animals of design interest. However, the technique allows non-professionals in these areas, who may be professionals in other design professions, to employ the technique to add natural system habitat functionality to their area of design and management competency. It allows groups of habitat design professionals for the built and non-built or natural or managed environments to work in concert and achieve far higher levels of habitat quality and quantity than occurs at present through or with current interactions among these professions and professionals.

There are several secondary deliverables from the design process. These include: A Function-based Habitat Design GIS Database, which Converts to an Asset Management Tool. The Function-based Habitat Design technique is GIS based. Therefore, it integrates well with the digital products of other project participants. However, its real value is as an asset management tool following the design phase of a project. Upon completion of the design phase, it is suited for tracking and managing the installation, management, assessment and optimisation phases of the project. Habitat must have people and economies as its ultimate point of delivery. This assures its integration with human systems and human interests. GIS is a simple means of assuring that this transition from design to use occurs within one simple software environment.

The invention proposes two habitat handbook types. These handbooks initiate and direct the long term operational phase of a project. They culminate in the production of optimal habitat benefits and their delivery to both the non-human animal populations occupying the habitat and to the human population that has assumed responsibility for and carried out it's responsibilities as knowledgeable members of the habitat.

The first such handbook is a Habitat Maintenance Handbook, which is a handbook describing actions to be taken for routine maintenance of habitat in its post installation and maturation phases. Horticultural maintenance actions are inadequate for habitat maintenance as are those typical of landscape maintenance activities. Therefore, habitat maintenance personnel must be educated, trained and directed by this handbook to produce the habitat conditions resulting in a path toward habitat optimisation over time for a particular design and its site conditions.

The second such handbook is a Habitat Manager's Handbook, which provides Management with achievable measurable goals and objectives. For habitat management the primary goal is achievement of habitat value within a parameter set defining habitat optima. Habitat management in the absence of design optima is management with suboptimal goals as a focus. A typical focus for suboptimal goals is "manage what you've got" instead of "manage to what you can get" using a habitat design optimisation technique. This undesirable approach is typified by early release of animals before reaching "most desirable" or even "significantly better" veld conditions.

A Habitat Manager's Handbook presents the Function-based Habitat Design for a project and the set of actions that must be taken to move to achievement of the optimal end product achievable using the design. It incorporates by reference the Habitat Maintenance Handbook and the GIS-based project design. It indicates points in time for comparison of achievement vs. planned progress toward design goals. It suggests tests against design for betterment of optimisation goals and objectives. It is a document to control people, particularly habitat owners, in achievement of habitat goals.

The "handbooks" herein referred to may be in any physical form suitable to convey the information to a user, be it in written or printed form as hardcopy, permanently bound or in loose-leaf form; it may be in digitally stored form on any suitable carrier such as magnetic media or CD-rom or downloaded or downloadable into a computer from any source. It may also be provided in audio- or audiovisual form.

The aforesaid possibilities and modifications also apply to other aids for performing the invention referred to in what follows. Protection is sought as well for these means for performing the teachings of the invention.

Preferably, the invention also provides Vegetation Planting Palettes which are Design Animal Habitat Guild specific. The sequence of vegetation species presentation is in accordance with a habitat function support value ranking achieved by employing the sequence of habitat functions most important in achieving optimal habitat. This habitat function valuation prioritisation sequence acts to sort an assigned numerical ranking, e.g. ranging from 1 to 6 employed and assigned to each vegetation species for each Design Animal Habitat Guild.

Highest ranked vegetation species associated with each Design Animal Habitat Guild are planted within the Habitat Pattern Map patterns and are used to extend and increase the size of those units where warranted by design and habitat functionality criteria. The design and habitat functionality criteria are contained in the Design Animal Habitat Guild specific Habitat Templates. Cross Design Animal Habitat Guild checks are made to assure that chosen vegetation species for installation are of high habitat function support value for several Design animal Habitat Guilds. It is preferable that these checks assure that different and multiple habitat functions are chosen for cross-guild indications of high habitat functionality support design suitability.

Preferably, the invention also provides a Habitat Supplements Handbook which assures that suitable habitat supplement types and numbers per type are installed within each habitat pattern map type. It offers both generic and species specific application information.

From the aforegoing it will be understood that the invention teaches a highly sophisticated method and set of tools for upgrading and greatly improving the commercial and/or ecological value of existing terrains and items of real estate.

In order to further ease the practising of the invention, the invention teaches the provision and use of specialised software and of computer hardware in which such software has been installed as well as the performance of the method according to this invention by means of such soft- and hardware.

Some specific embodiments wherein the invention is applied to specific situations are defined in claims 6, 7, and 8.

The method according to the invention as set out in claim 4 is, in practice, performed with the aid of computer software, programmed to perform steps of the method on the basis of data collected regarding the terrain and fed to the software. Indeed, preferably all essential steps thereof are performed computer-assisted. According to a further aspect of the invention, there is provided a method of function-based habitat construction, i.e. a method of actually implementing (on site) the design features so determined in the terrain being subject of the function-based habitat design method.

This may include one or more, preferably all, of the following (not necessarily all at the same time):
habitat supplements as determined by the function-based habitat design method are installed at localities identified by the function-based habitat design method;
plant species as determined by the function-based habitat design method are planted at localities identified by the function-based habitat design method;
seed balls are distributed in localities where specific plant growth is to be procreated, the seed balls being double layer clay balls having an inner core portion, comprising a seed and litter/mycorrhizae mix, the seed being selected as determined by the function-based habitat design method, and an outer layer forming a clay coat protecting the inner core portion until conditions are appropriate for germination;
live animal species as determined by the function-based habitat design method are introduced into and released in the terrain, more particularly, so that viable populations representative of each design animal habitat guild determined by the function-based habitat design method are present in the terrain;
infrastructure is established in the terrain selected and located as identified by the function-based habitat design method, more particularly the infrastructure includes roads and/or buildings and/or dams;
topographic features are added or modified in the terrain as determined by the function-based habitat design method;
closely spaced Vee-shaped depressions are made in soil using a heavy profiled roller implement to facilitate rainfall retention and accumulation of organic matter.

The scope of the invention extends to a software package combined with instruction manual in digital and/or written and/or audio form, characterised in that, used in combination and with the software loaded into a computer, it instructs and guides an operator/implementer or team through the performance of the method as set out in the aforegoing.

The scope of the invention also extends to a computer loaded with software which alone or in combination with one or more manuals in digital and/or written and/or audio form instructs and guides an operator/implementer or team through the performance of the method set out above.

In what follows the invention will be further elucidated with reference to the accompanying drawings in which:
- Fig. 1:: is a diagram showing the three-way relationship among a Design Animal Habitat Guild (DAHG), a habitat function and a mapping unit in accordance with the invention;
- Fig. 2:: represents a function-based habitat design process flow chart for the method according to the invention;
- Fig. 3:: is a diagram showing steps in the method according to the invention, showing transitions in relationships among terrain features, structural units, decision units and design units;
- Fig. 4:: is a Vegetation Cover Types, Terrain Features and Habitat Decision Units Map (VTD map), prepared in an example of the method of Figs. 1 and 2. At the same time it also serves as a terrain feature and animal decision unit map in the working example;
- Fig. 5:: is a conformed Design Animal Habitat Guild Specific Habitat Pattern Map for the same experimental site terrain as covered by Fig. 4. For purposes of the working example, this Figure 5 doubles as a Vegetation Cover Types, Terrain Features and Habitat Decision Units map;
- Fig. 6:: is a process diagram illustrating steps in part of the method according to the invention for establishing animal species-structure-habitat function relationships to support achievement of habitat functional optimality;
- Fig. 7:: is a diagram showing a minimum number of mapping unit types required to depict terrain feature and structural unit types - savannah;
- Fig. 8:: is a diagram showing a minimum number of mapping unit types required to depict terrain feature and structural unit types - aquatic;
- Fig. 9:: is a diagram corresponding to Fig. 7 showing habitat guild decision unit types associated with savannah terrain features and structural unit types;
- Fig. 10:: represents habitat structural units and habitat supplements in an example of the method according to the invention as architectural adjuncts;
- Figs. 11 -14:: illustrate examples of landscape architectural structural opportunities to incorporate habitat functionality in a method according to the invention in the following situation: "Natural" System (Fig. 11), Horticultural Systems (Fig. 12), Hardscape (Fig. 13) and Softscape (Fig. 14);
- Fig. 15:: illustrates diagrammatically how in landscape architecture the method according to the invention serves as a tool for gain in habitat value (a) within a developed area;
- Figs. 16 - 21:: illustrate printed data sheets in the form of tables 1 to 6 for use in the method according to the invention, including in diagrammised form how these tables are to be completed, wherein
Table 1 (Fig. 16) includes an animal species list, candidate habitat guild labels, habitat function prioritisation and mapping unit's degree of association;
Table 2 (Fig. 17) reflects a ranking protocol for either habitat function support value or degree of association;
Table 3 (Fig. 18) represents a mappable unit types list;
Table 4 (Fig. 19) represents a design animal habitat guild requisites template;
Table 5 (Fig. 20) serves to tabulate vegetation species rankings for design animal habitat guild specific habitat function support value;
Table 6 (Fig. 21) represents a design habitat guild specific vegetation planting palette.

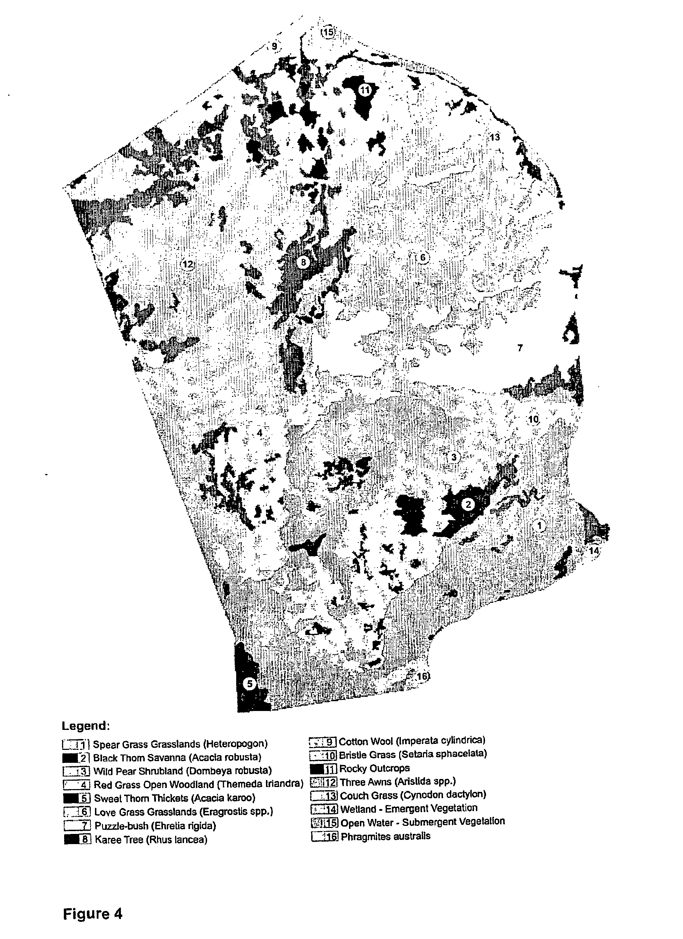

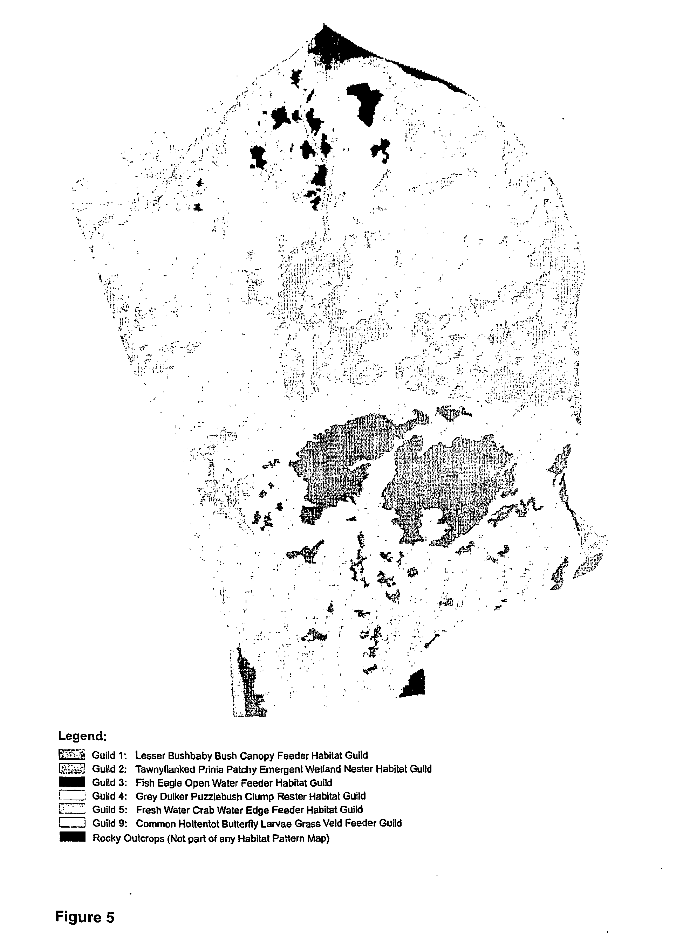

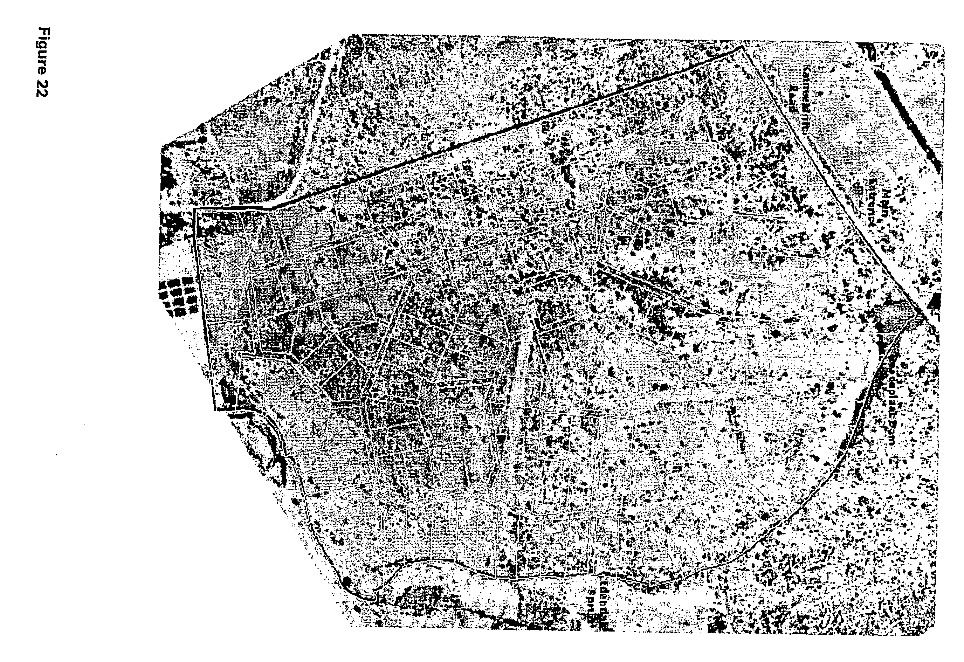

- Fig. 22:: represents a development plan (low density housing estate) applied to the experimental site terrain as covered by Figs. 4 and 5 (working example);

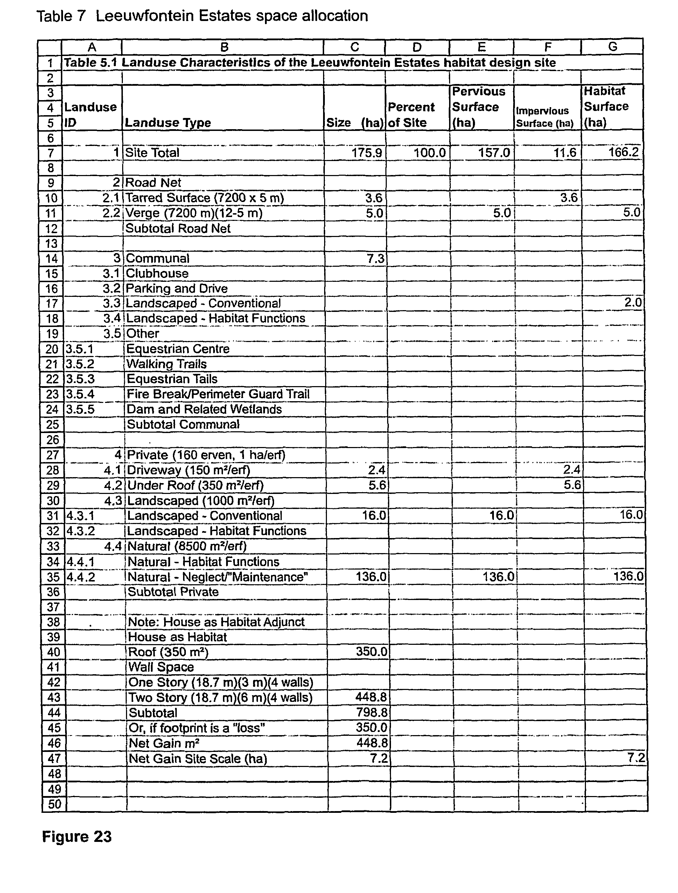

- Fig. 23:: shows a completed Table 7, being a housing estate space allocation for the experimental site terrain of Fig. 22;

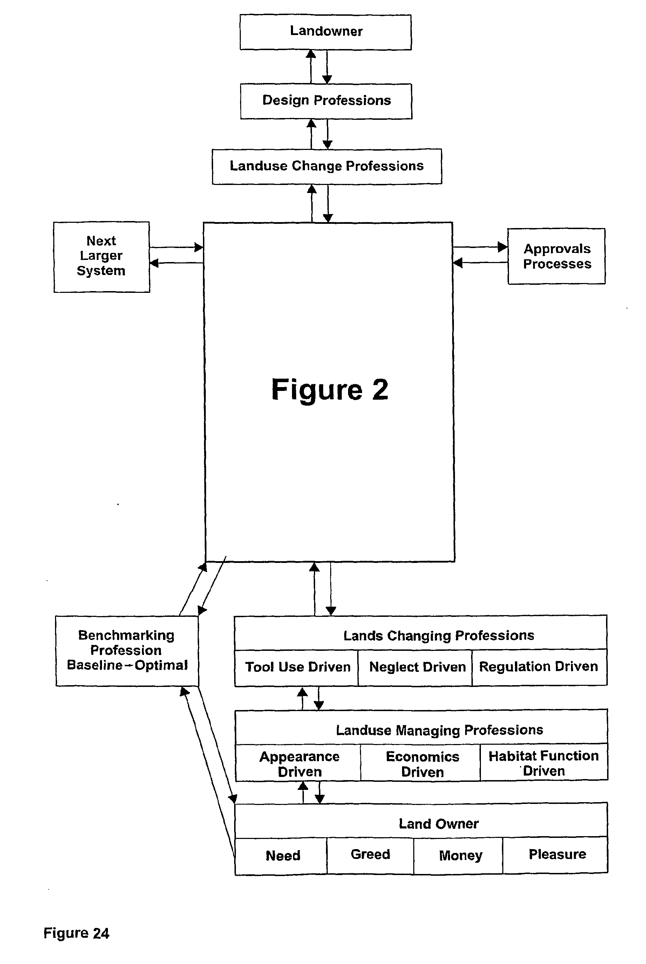

- Fig. 24:: represents a diagram placing the habitat design according to the invention in a human decision making context;

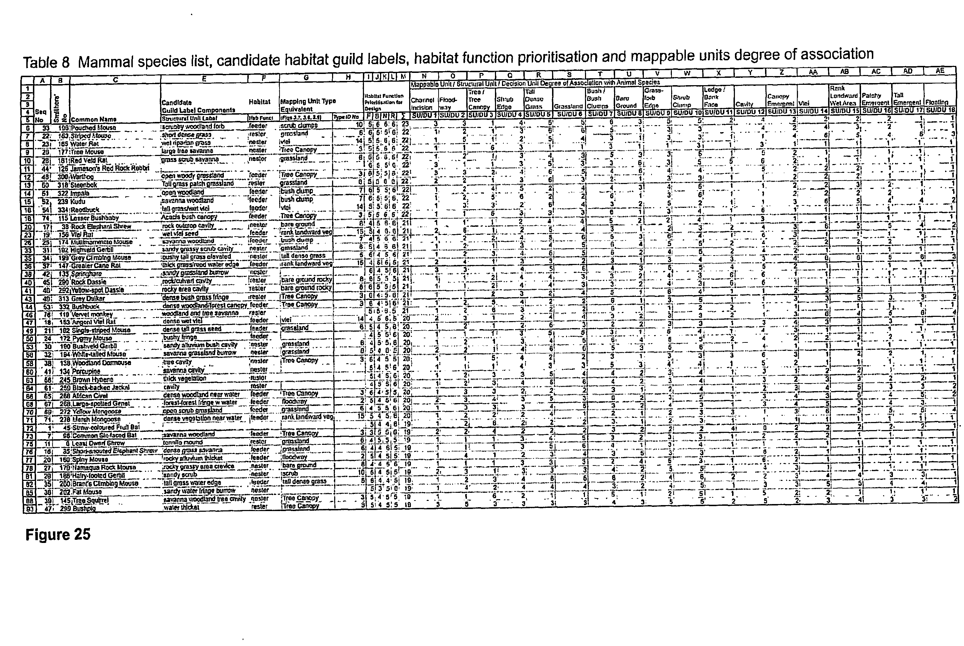

- Fig. 25:: represents Table 8, being part of a modified form of mammal species list, candidate habitat guild labels, habitat function design, prioritisation and mappable unit type degree of association as part of the working example;

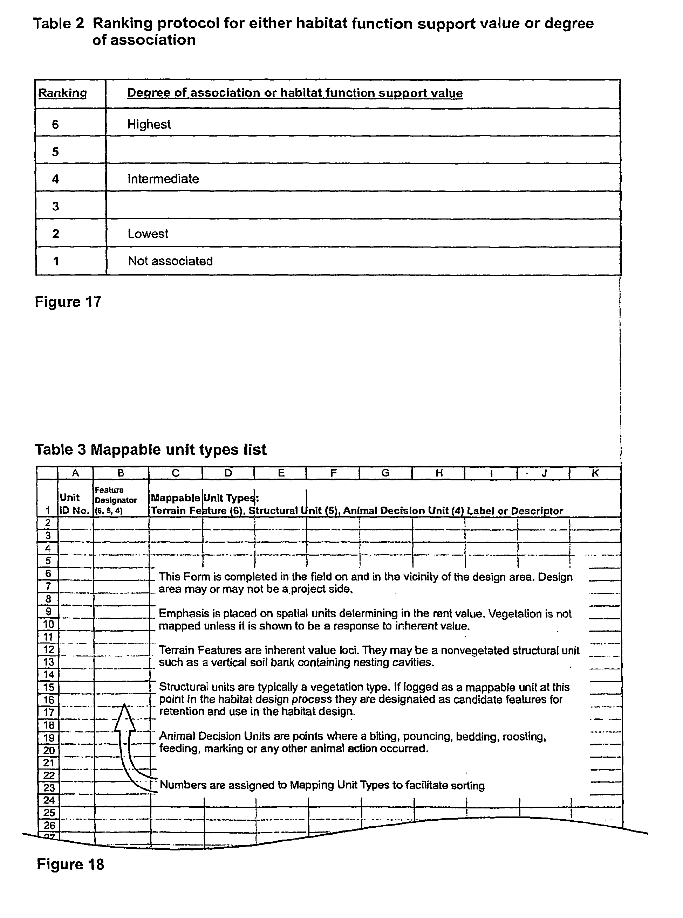

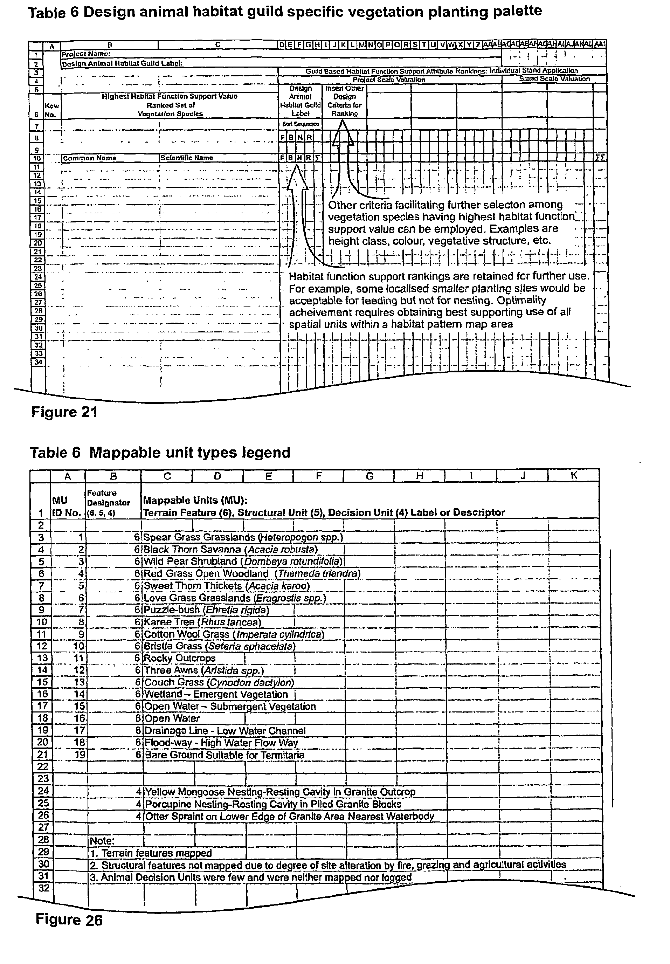

- Fig. 26:: represents Table 9, "Mappable Unit Type Legend", of Table 3 (Fig. 18) for the working example.

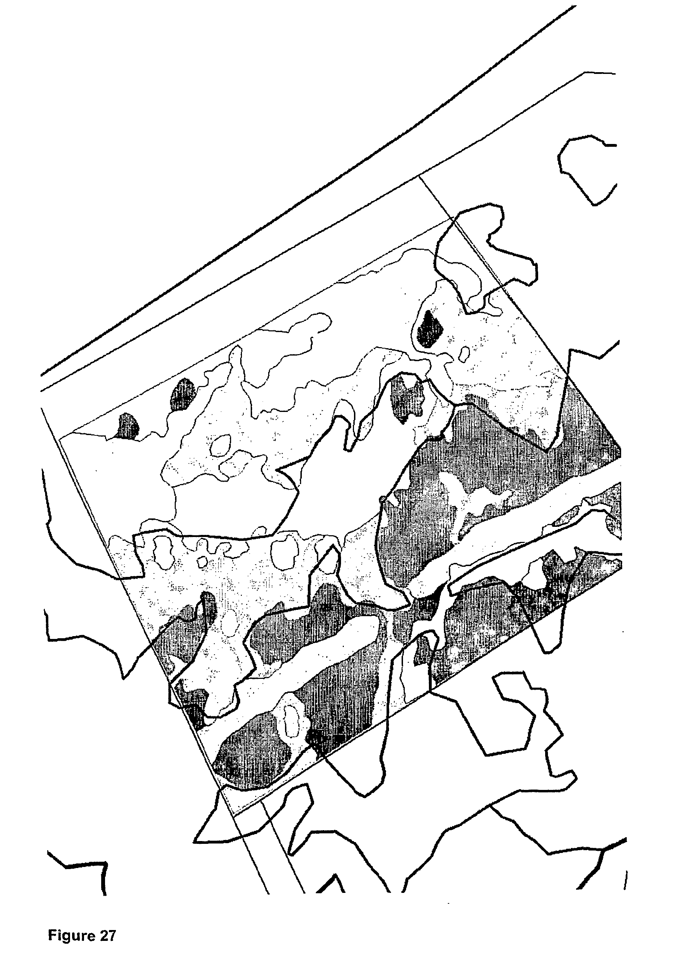

- Fig. 27:: represents as part of the working example a larger scale map illustrating conformance of stand to site scale mappable units.

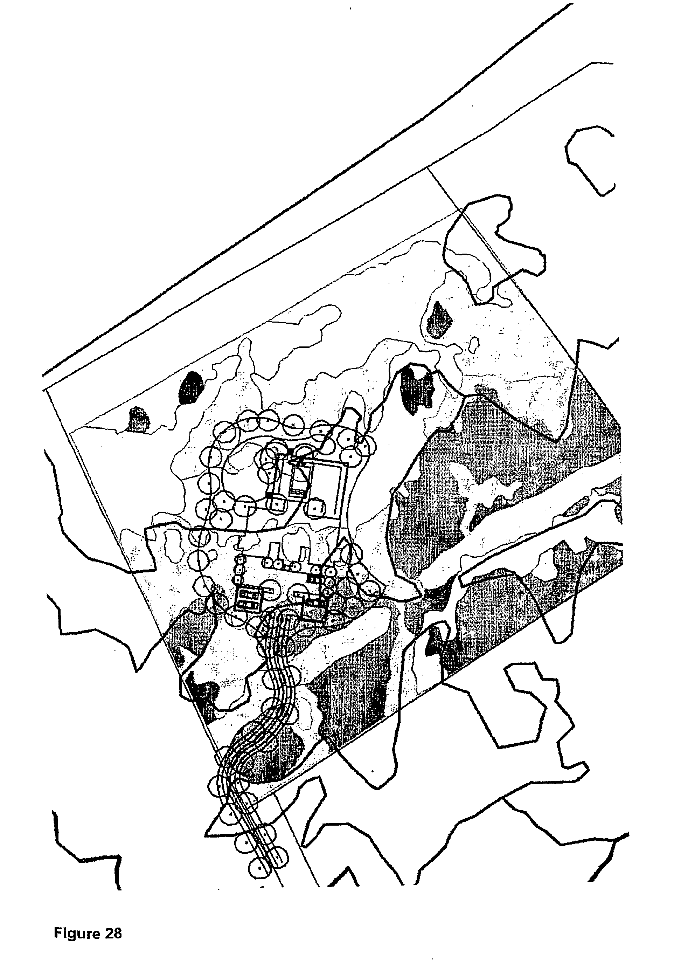

- Fig. 28:: represents the map according to Fig. 27 showing (superposed) conformance of landscape architectural and architectural footprints to stand scale mappable units.

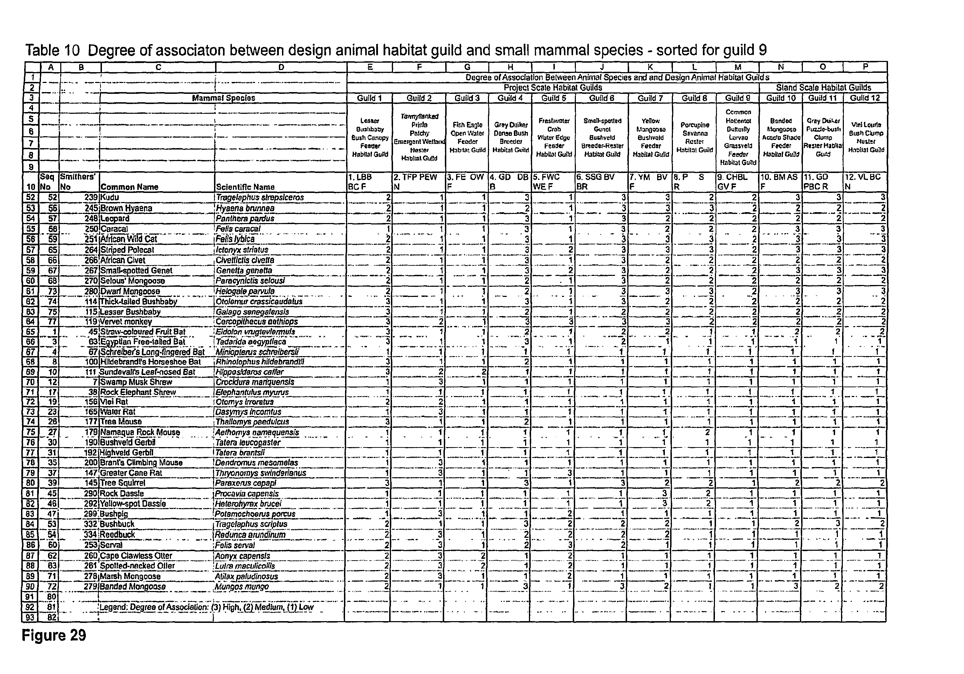

- Fig. 29:: represents Table 10 illustrating the degree of association between each design habitat guild and small mammal species - sorted for DAHG 9 for the working example;

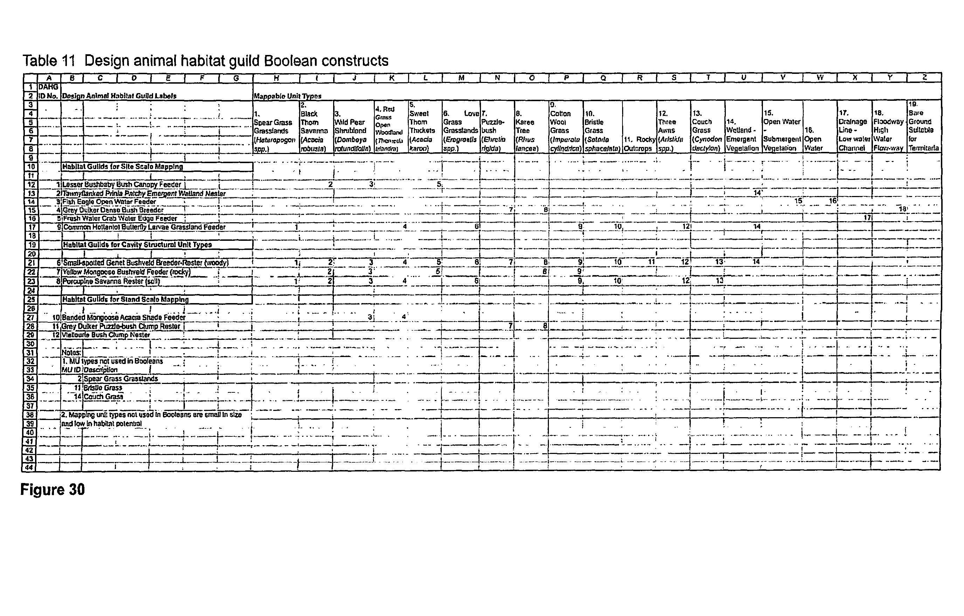

- Fig. 30:: represents Table 11, illustrating Design Animal Habitat Guild Boolean constructs as part of the working example;

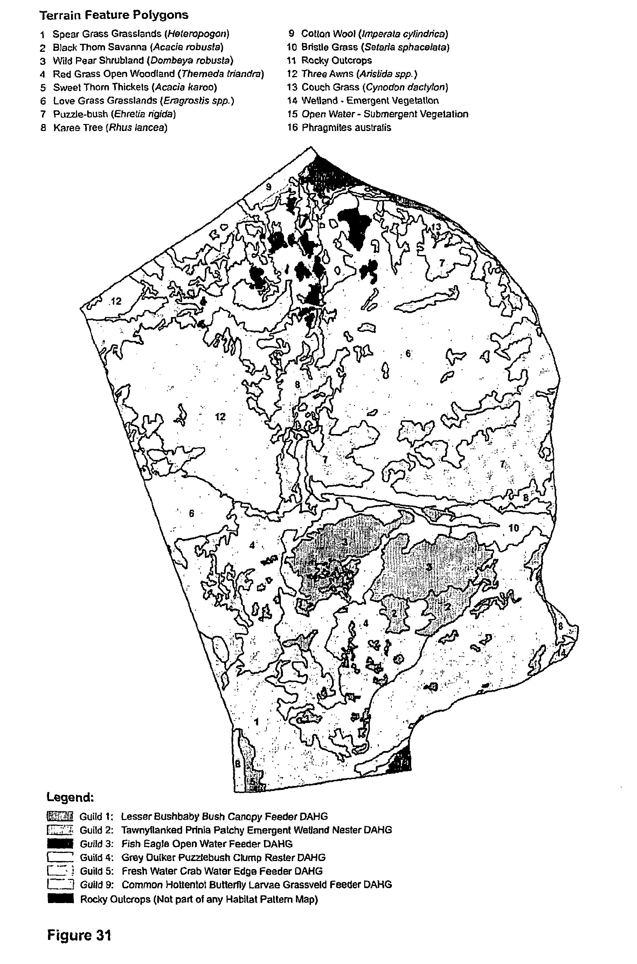

- Fig. 31:: represents superposed on Fig 5 terrain features polygons to serve as a composite habitat guild map in the form of a Vegetation Cover Types, Terrain Features and Habitat Decision Units Map;

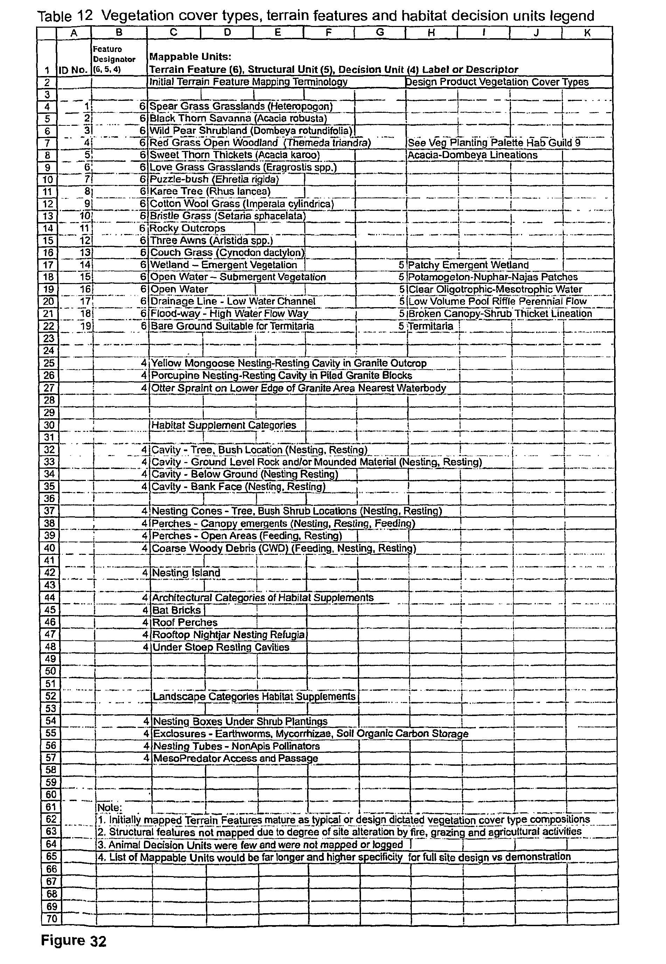

- Fig. 32:: shows Table 12 in respect of vegetation cover types, terrain features and habitat decision unit legends;

### Referring now to the drawings:

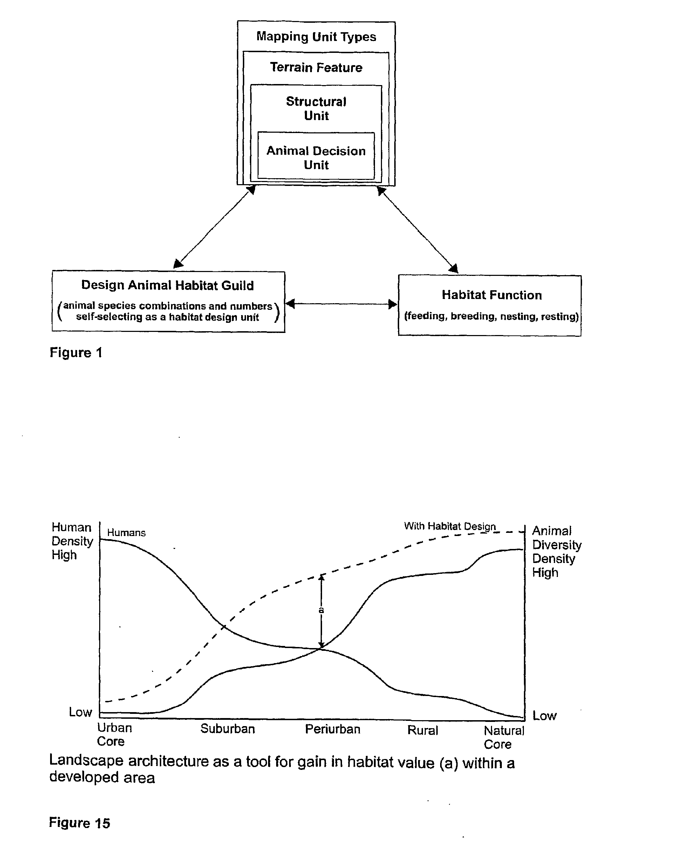

In the Function-based Habitat Design (FBHD) process the habitat functions feeding (f), breeding (b), nesting (n) and resting (r) are used as bases for habitat design in a three-way relationship among:
(1) A ranked set of habitat functions (f,b,n,r),
(2) An animal habitat guild and
(3) An aggregation of structural units and animal decision units within which selected habitat functions and a habitat guild co-occur (Figure 1).

A habitat function is selected as part of the label for a Design Animal Habitat Guild. The selected habitat function is the one best suited to drive the achievement of habitat optimality for a particular animal guild through a habitat design process. An animal guild is a group of animals making a similar use of a similar resource. An animal habitat guild is a group of animals associated with the obtaining or satisfying of a design emphasised habitat function in association with a mappable terrain feature, structural unit or animal decision unit. Terrain features, structural units and animal decision units are mappable units having distinct inherent or innate value for the provision of components of habitat.

The inherent or innate value attributes of a terrain feature are primary determinants of the structural units that can or will occur on the feature. Structural units may be vegetative, edaphic, lithic or hydrologic in nature but are correlated with a habitat function and an animal habitat guild. Structural units contain animal decision units. Animal decision units are animal selected point or small area features in which a habitat function is or can be satisfied at a point in time. Animal decision units include decision units associated with life requisite pre-obtainment and post obtainment activities.

Determination of the three-way relationship is fundamental for co-placement of structural units, animals and habitat functionality. The relationship is physically established then functionally optimised.

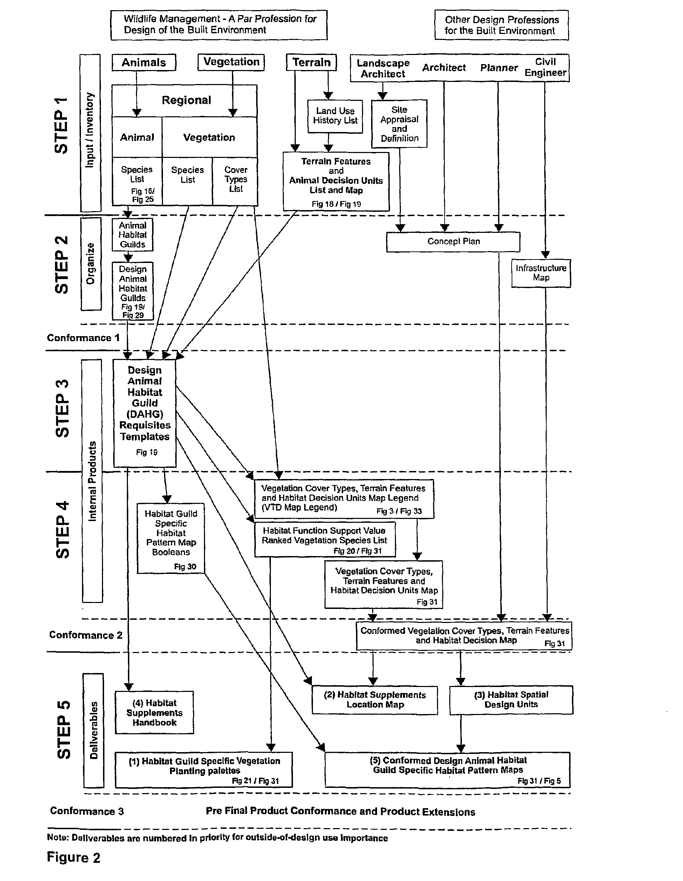

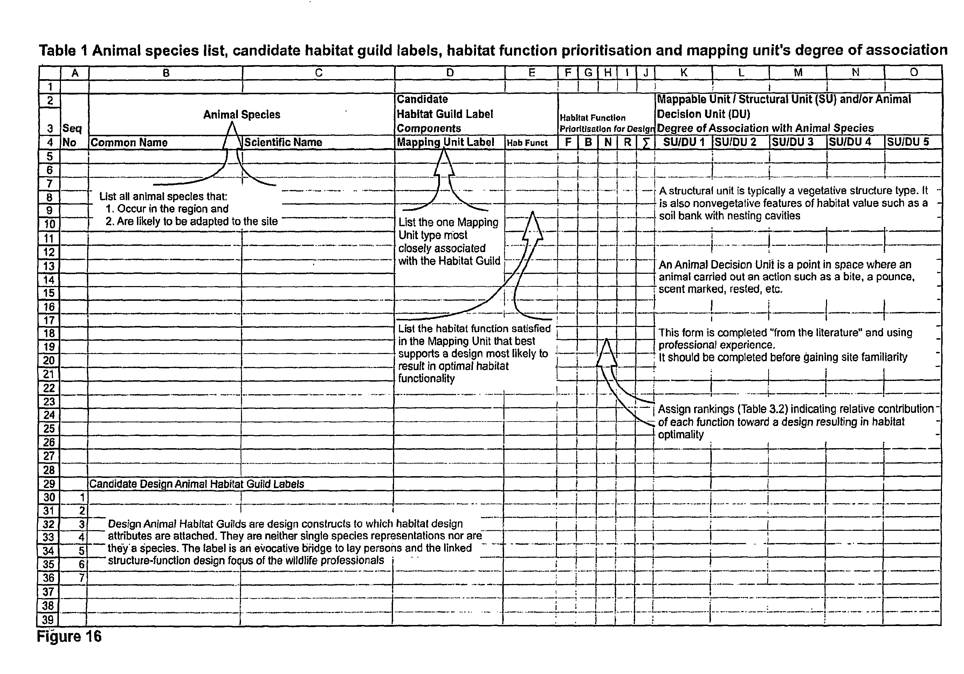

Steps 1, 2 and 3 of the habitat design process involve the conversion of conventional lists of habitat components to establish this three-way relationship (Figure 2). Listed animal species are initially linked at the species level with closely associated structural unit types (Fig. 16, Table 1). A habitat function support value ranking is assigned, based on each mapping unit type's value to each animal species (Fig. 17, Table 2). Terrain features, structural units and animal decision units are compiled then categorised considering habitat function-based innate and inherent value potential rather than extant conditions (Fig. 18, Table 3). Vegetation species for the site and region are compiled. Their assignment of habitat function support value occurs after the three-way relationships groupings required for design, are established.

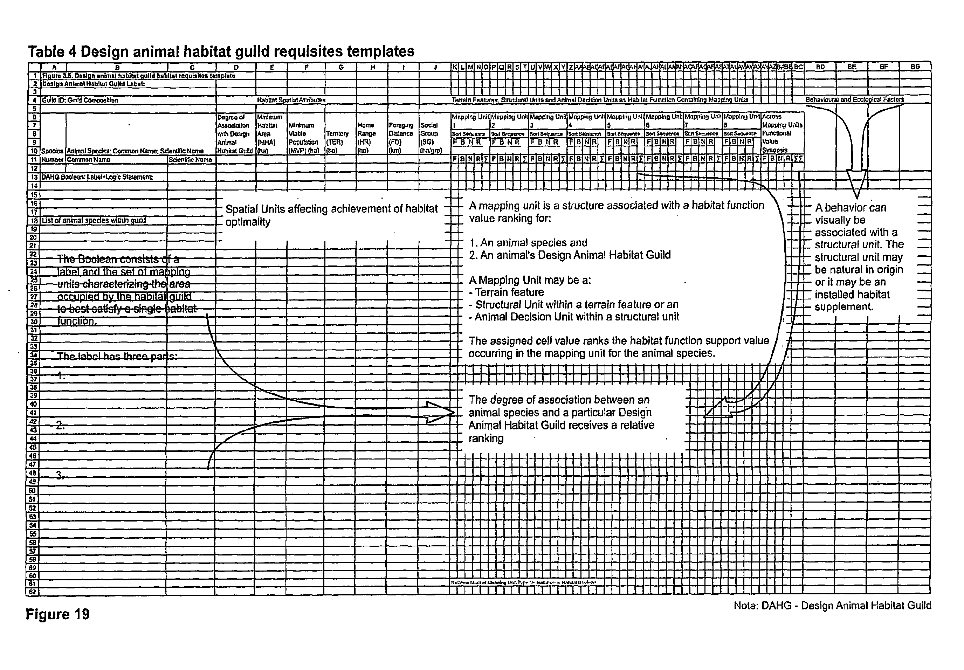

The Step 3 Habitat Guild Requisites Template format contains both the end products of the initial data lists conversion processes and the basis for production of the interim products for habitat design (Fig. 19, Table 4). A Habitat Guild Design Template is constructed for each Design Animal Habitat Guild required for a habitat design. The template contains:
(1) The animal species names comprising the guild (Columns B & C). The species names are assigned a ranking for the degree of association with the Design Animal Habitat Guild.
(2) The mapping unit types selected as bases for Habitat Guild specific spatial patternings best supporting achievement of habitat optimality (Columns K-AX) and
(3) Rankings indicating the degree of habitat function support value for each animal species-structural unit-habitat function combination (species-fbnr matrix).

Sortings of the Degree of Association and other rankings are used to establish animal groupings for degree of habitat function-structural unit of association.

The Degree of Association rankings, when sorted, suggest animal species groupings relative to an opinion based valuation of the three-way relationship between an animal, a best design option habitat function and the structural unit within which that life requisite is met (Table 4, Column D) in Fig. 19.

Several different mapping unit types are typically required to comprise habitat for an animal species (Table 4, Rows 6 & 7). The extent to which any one type of mapping unit can satisfy a life requisite requirement varies from the others (Table 4, Rows 8, 9, 10). A habitat function weighted summation of these relative rankings indicates the relative value of each Mapping Unit type in satisfying habitat functions at the level of the individual function (Table 4, Labels F, B, N, R). Similarly, an Across Mapping Units Habitat Functional Value Synopsis can be used to assess relative value of any combination of mapping units for the production of opportunities for delivery of habitat function support value to any animal species or grouping of animal species (Table 4, Columns AX-BC).

The mapping units, if design protocols are met, will eventually contain those structures suited for and closely linked with successful completion of actions and behaviours that are required for life cycle completion (Table 4, Columns BD-BG). Listing them is important for several reasons. They may not occur in either the extant condition or during the post-installation era. The number and types of these features required for habitat optimality likely far exceeds that occurring under either natural or well-managed conditions. Listing these requisites for functional habitat is the initiation point leading to design process elements to characterise and build in these structures (Figure 2, Step 5, Deliverables 2 & 4). Doing so satisfies both design and habitat optimality benchmarking requirements.

From sortings prior decision-making and choices relative to Design Animal Habitat Guilds and related data can be reviewed. Revisions should be made where warranted at any point of or level within the preceding efforts. Upon reaching an acceptable status for content of and relationships within the template, production of interim products can proceed.

Interim Products (IP) of the habitat design process are:
(1) Habitat Guild specific Habitat Pattern Map Booleans (Figure 2, Step 4) (Fig. 19, Table 4, Rows 2, 4 & 14).
(2) A Vegetation Cover Types, Terrain Features and Habitat Decision Units Map Legend (VTD Legend) (Figure 2, Step 4),
(3) A Habitat Guild Specific Habitat Function Support Value Ranked Vegetation Species List (Figure 2, Step 4),
(4) A Vegetation Cover Types, Terrain Features and Animal Decision Units Map (VTD Map) (Figure 2, Step 4) and
(5) A Conformed Vegetation Cover Types, Terrain Features and Animal Decision Units Map (Conformed Map) (Figure 2, Step 4).

The Habitat Pattern Map Booleans are a summation of a portion of the list of mapping unit types (Table 4, Rows 6 & 7). The highest scoring mapping unit types are a presumed core portion of the Habitat Pattern Maps. Other mapping unit types may be added to a Boolean to form a contiguous set of mapping unit types that are highly ranked for their habitat function support value. Use of a Mapping Unit type for more than one type of Design Animal Habitat Guild is not allowed. Design, installation, management, maintenance and benchmarking activities require defined areas within which tasks occur and any overlap among Habitat Pattern Maps would lead to confusion and ambiguity. Comparisons among Degree of Association rankings among different habitat guilds will generally indicate that many species have strong associations with mapping units occurring within other Habitat Pattern Maps. This functional overlap rather than structural overlap is considered a strength of the technique.

In the Vegetation Cover Types, Terrain Features and Habitat Decision Units Legend (VTD Legend) (Figure 2, Step 4) the previous emphasis on terrain features (Figure 2, Step 1), structural units (Fig. 16, Table 1) and animal decision units (Table 1) changes.

During site characterisation inherent value loci are mapped as terrain features; animal decision units are noted and located; and structural units are ignored for mapping but are later linked during a desktop exercise to animal species and behaviours essential to life cycle completion (Fig. 16, Table 1). Habitat design must result in high densities of high habitat function support value structures occurring and persisting on the initially mapped terrain features units. Therefore, a return to consideration of structural unit types with diversity and density attributes suited to terrain feature types is a design requisite. This is best treated as a series of vegetation cover type labels for the complex of vegetative structures with their embedded habitat functions and animal decision units that will be installed and benchmarked to optimality. The labels may be conventional or arise from the design process when composition, structure, function and utility of the given Habitat Pattern Map's components are realised.

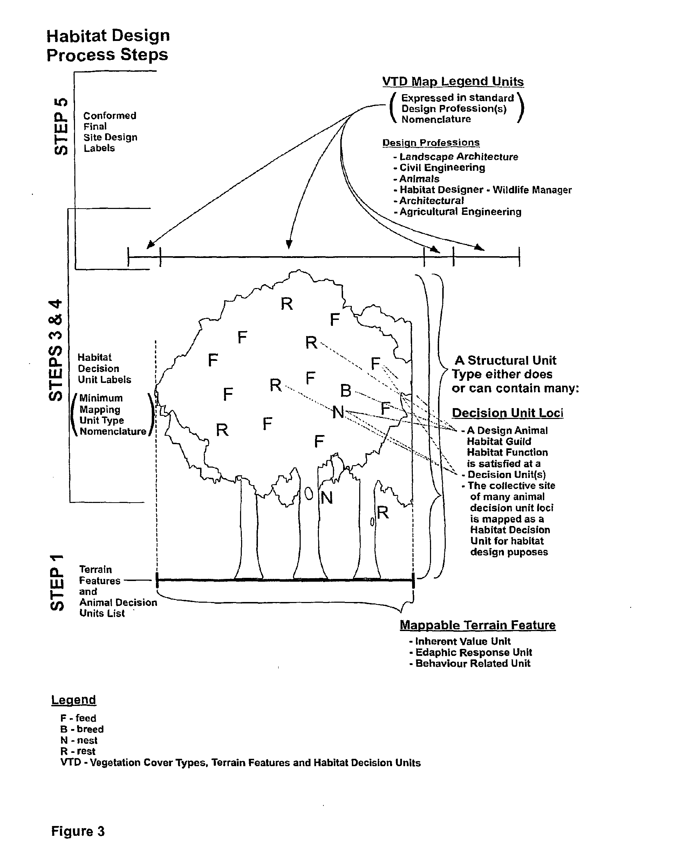

The shift from initial characterisation and listing of Animal Decision Units to beginning the design and installation of Habitat Decision Units follows a similar logic. The need to catalogue animal-structure-function relationships is based on animal decisions and behaviours. In the habitat design process these enter the process as animal determined essentially point-focused actions required to meet a life requisite (Figure 1) (Table 1) (Fig. 18, Table 3), a process of reaggregation from animal action focused on a point (Table 4) to an area-based feature type amenable to design. This aggregation is necessary to have design features that can be progressed toward habitat optimality by human actions. The shift in nomenclature from "animal decision" to "habitat decision" is a shift from recognition of a fine-grain sized point-based action within a structure type by an animal to design recognition of the structural unit type within which these point-focused actions occur (Figure 3).

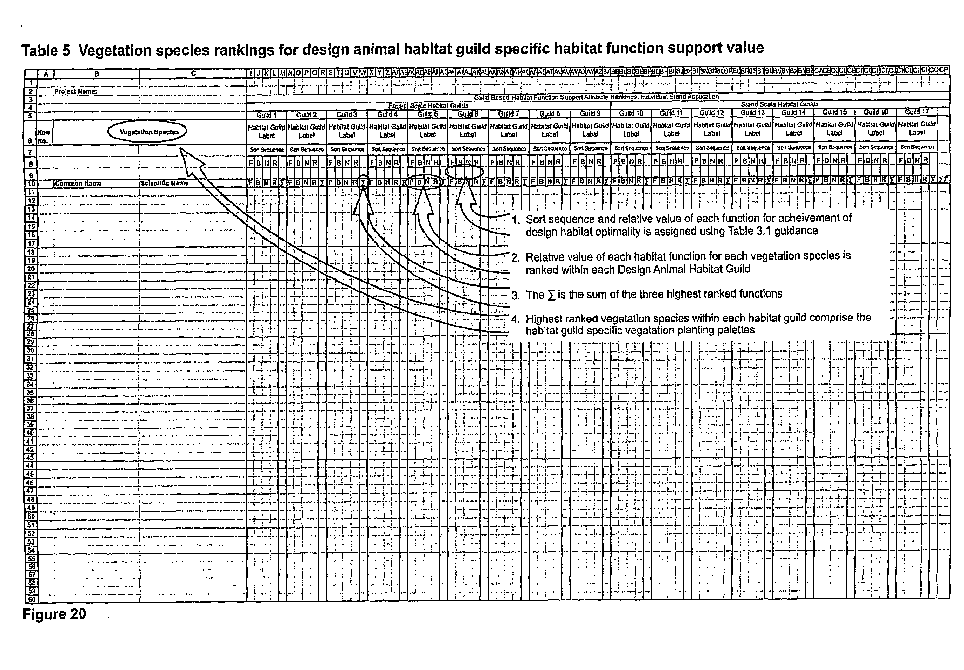

A Habitat Guild Specific Habitat Function Support Value Ranked Vegetation Species List (Vegetation Species List) (Fig. 20, Table 5) is required for each Design Animal Habitat Guild (Figure 2, Step 2) (Table 4). In the Vegetation Species List the same three-way relationship among animal group-habitat functions-structure is again ranked for habitat functional significance. However, the ranking relationships are now specific for each Design Animal Habitat Guild and, therefore, for each Habitat Pattern Map used in the design. Because the vegetation species have been ranked that subset of the species providing the majority of the habitat value for a guild can be placed in a Vegetation Planting Palette specific to a guild and its Habitat Pattern Map (Figure 2, Step 5, Deliverable 1) (Fig. 21, Table 6). Thereby, control over spatial units is asserted. This control is necessary for design, installation, maintenance, management and benchmarking activities required to achieve habitat optimality.

The rationale expressed above for the VTD Legend is applicable to and spatially expressed in the Vegetation Cover Types, Terrain Features and Habitat Decision Units Map (VTD Map) (Figure 4). Terrain Features will occur on the map only if they will remain unvegetated. In all other instances the structural unit types depicted are those that would occur within each terrain feature type at habitat optimality. Some Habitat Decision Units may warrant individual depiction. However, most to virtually all Habitat Decision Units will be adequately represented within the vegetation cover type depictions. Habitat Supplements are a special case of habitat decision units requiring spatial depiction and are treated in their appropriate section (Figure 2, Step 5, Deliverable 2).

Conformance 2 (Figure 2, Step 4) occurs after all data have been processed and converted from an animal and site characteristics perspective to a design and human interests perspective. The achievement of habitat optimality will occur only with a strong, perpetual and positive link to human interests.

The lower standard for conformance success is spatial conformance with the other participating designs. Professional competence is presumed. Therefore, intended animal occurrence and usage per design goals is normative. The minimal design goal for the wildlife professional is the sufficient, self-willed, perpetual incorporation of knowledgeable laypersons into the habitat design end product as fully functional components of habitat. Fully drawing the expertise of the other project professionals into the habitat design is a necessity. An awareness that, while habitat design for most animals requires knowledge of structure-function-animal requisite relationships with a limited requirement for behavioural factors, the reverse is true when designing the human component of habitat.

Step 5: Deliverables: The five deliverables (Figure 2, Step 5) from the habitat design process provide the specifications for the pursuit of habitat optimality within the design area. They have a similar utility for but differ in their applicability to off-site areas. Application elsewhere in many locations on a piecemeal basis by professionals and laypersons is an intended use of the deliverables. Most application sites will be sub-threshold for the spatial requirements necessary for habitat optimality. Therefore, continual upgrading of habitat potential at larger than habitat spatial scale will be a chronic need. These products will receive most of their use in such areas outside of the design site.

The deliverables from the habitat design process, presented in order of general value or for a piecemeal application in areas not having a habitat design, are:
(1) Vegetation Planting Palette: - For a general usage each Vegetation Planting Palette (Fig. 21, Table 6) is generally suited for use within one primary vegetation structure type. Vegetation structure types are typically readily recognisable by individuals without formal training. The inclusion of a vegetative structure type within the label serves to direct appropriate siting for plantings. The ranking of vegetation species within each habitat guild or structure type can serve as a recommendation for purchase and plantings by commercial nurseries.
   In contrast to this ad hoc near random usage of the Vegetation Planting Palettes the within-design area planting locales (Figure 2, Step 5, Deliverable 3) (Figure 1 blank) are linked to the initial site mapping of terrain features and animal decision units (Figure 2, Step 1). This link of (1) structural unit type to (2) site conditions best supporting that structural unit type for a (3) specific animal habitat guild should offer a best opportunity for achievement of habitat functional optimality.
   This duality of intended usage type, within-design area and elsewhere, by professional or laity, could result in a general increase in habitat value in a region over time. The lists and their widespread usage may increase the likelihood of commercial offerings of vegetation having higher habitat utility. Obviously the species can be further associated with aesthetics and other criteria affecting choice for installation.
(2) Habitat Supplements Location Map: - Provision of cavities of suitable dimensions in locations and densities required for acceptance and local area perpetuation of using species is a necessitv. It ranks on-par with the presence of suitable vegetation species as a life requisite provision. Provision of the Habitat Supplements Location Map (Figure 2, Step 5, Deliverable 4) is ranked above provision of the supplements because the intent of the habitat design process is achievement of habitat optimality and not human entertainment.
   The map specifies supplement type and the location or area of installation. It parallels a detailed vegetation planting plan in its detail. Utility is the installation objective. The Habitat Supplements variety of type installed is a function of and essential for achievement of habitat optimality and consequent delivery of human pleasure. In a formal design a balanced installation of types is driven by design goals.
(3) Habitat Spatial Design Units: - Humans and the general installation of functional habitat would be well served by an appropriately sized spatial unit that is applicable for generation and management of functional habitat in the absence of a formal habitat sized design (Figure 2, Step 5, Deliverable 3). Habitat functional success can occur over many different sizes of spatial units. However, its success in a human system context is a function of human interest and willingness to act.
   Human habitat vegetation patch size and a positive economic relationship occur at a spatial unit threshold size of 150 metres. Certain high-value habitat functions are associated with a similar or smaller patch size. This patch size is not a determination from the habitat design process. It is a recommendation for generation of human involvement in habitat creation and management in association with a spatial unit having a positive economic feedback affect.
(4) Habitat Supplements Handbook: - The Habitat Supplements Handbook (Figure 2, Step 5, Deliverable 4) contains the knowledge base required for successful utilisation of Habitat Supplements. Successful utilisation of Habitat Supplements is characterised by:
   1) A high level of utilisation success by intended species of animal users and
   2) Nominal progress towards optimal Habitat Supplements utilisation using human inputs to install, maintain and achieve benchmark indices.
      Habitat Supplements are preferably generic in use to the extent practicable and species specific where warranted. Interspecies competition and user species vulnerability are reasons for species specificity of design whether the intent is to facilitate use by one species or the exclusion of another. Unintended uses are fortuitous and offer opportunities to examine the potential offered to achieve habitat optimality.
(5) Conformed Habitat Guild Specific Habitat Pattern Maps: - The Conformed Habitat Guild Specific Habitat Pattern Maps (Figure 5) are a product of a specific habitat design and applicable only to the design site. However, they have significant inferential value that could be of use elsewhere.

For design application each Habitat Guild Habitat Pattern Map depicts the area for which it is applicable, the structural types comprising the map and a label for each included terrain feature type (Figure 5). The Habitat Spatial Design Unit sizing recommendations (Figure 2, Step 5) can be used to delineate where these units could or should occur within a conformed Habitat Pattern Map.

The landscape architectural integration with the Habitat Pattern Maps, and vice versa, should be total. Each aesthetic element must incorporate habitat functionality fully; then agree on conformance. The reverse is also true.

Architectural and engineering products have structural mandates that limit the extent of conformance and design integration. However, far more opportunities exist for conformance than are incorporated into designs. Overpasses and underpasses should be incorporated into the design until demand and ease of access criteria are met rather than forcing usage of limited choices. Cavities should be part of the initial design for both built-in and add-on options. The design criteria must be habitat optimality with carrying capacity as the dictate of adequacy of habitat function related opportunities. The end product conformed design is a component for use in benchmarking on-site habitat optimality and as an example informing design efforts and ad hoc efforts elsewhere.

Professional Role: - This technique is expressly intended to place the wildlife management professional on a par basis with the other built environment design and land use change and managing professionals.

The Habitat Guild Requisites Template is the core product and focal point for the wildlife professional involved in habitat design. Its content quality largely determines potential for achievement of habitat optimality.

Lay Role: - The foregoing habitat design process requires perpetual involvement of humans for achievement of habitat optimality. Outside of this habitat design process but intimately associated with it must occur the tools and a knowledge and skills set required for habitat installation, management, maintenance, benchmarking and, ultimately, achievement of habitat optimality. Further, each of these project phases, activity types, tools, knowledge and skills must be integrated into a single workable whole.

In what follows, the above summarised steps are further particularised with reference to Fig. 2:

### STEP 1: Compile and Inventory Habitat Design Requisites

List Animal Species: List the mammals and birds occurring and potentially occurring on the site and in the region, including migrants.

List Vegetation Species: List the vegetation species occurring and potentially occurring on the site and in the region including non-native or a non-indigenous species.

List Vegetation Cover Types: List the vegetation cover types that do and could occur on the site and in the region. Include vegetation cover types representing:
- optimal responses to inherent value sets of terrain conditions
- responses to disturbance regimes
- responses to management and maintenance regimes

List Mappable Terrain Features and Animal Decision Unit Types: A mappable terrain feature is a function of spatial scale. A mappable terrain feature is also a structure having inherent values that are determinants of habitat value (Figure 1) (Fig. 18, Table 3). The habitat value of a mapped terrain feature may or may not be expressed either when feature is mapped or when selected as a feature type for mapping.

An animal decision unit is a feature with a functional content that can prompt an animal action. The action taken is related to an animal obtaining a life requisite or satisfying a related need. An animal decision unit is typically a structural subunit of a mappable terrain feature type.

Prior land use can affect current terrain condition and content. Recovery of inherent value potential may require determining these effects and assessing consequences on achieving habitat optimality.

Review Site Findings: Review habitat related site findings with other involved design professionals. Review the site appraisal and definition findings of the other involved design professionals whose products and actions will affect site habitat potential.

### STEP 2: Select Design Animal Habitat Guilds

In Step 2 (Figure 2, Step 2) the suite of animal habitat guilds is listed that could occur on the site and in the vicinity under optimal habitat conditions during both the predevelopment context and the regional post-buildout period (Table 3). Based on the characteristics of these guilds a set of Design Animal Habitat Guilds (Fig. 18, Table 4) is selected. The Design Animal Habitat Guilds are that minimum set of spatially non-overlapping guilds offering the best opportunity to design and manage the site to habitat optimality. Habitat optimality is a design construct determined considering two states. State 1 is defined as regional predevelopment habitat optimality. State 2 is determined by the extent to which anticipated regional post-buildout conditions can approximate predevelopment conditions of habitat optimality.

Design Animal Habitat Guilds (Figure 2, Step 2) (Fig. 19, Table 4) are a construct. The list of animal habitat guilds (Figure 2, Step 2) (Fig. 16, Table 1) and their attributes are a basis from which Design Animal Habitat Guilds are constructed. The suite of Design Animal Habitat Guilds used for habitat design may be one of the listed animal habitat guilds, a derivative of them or a construct made using the knowledge gained during listing and attribution of the animal habitat guilds.

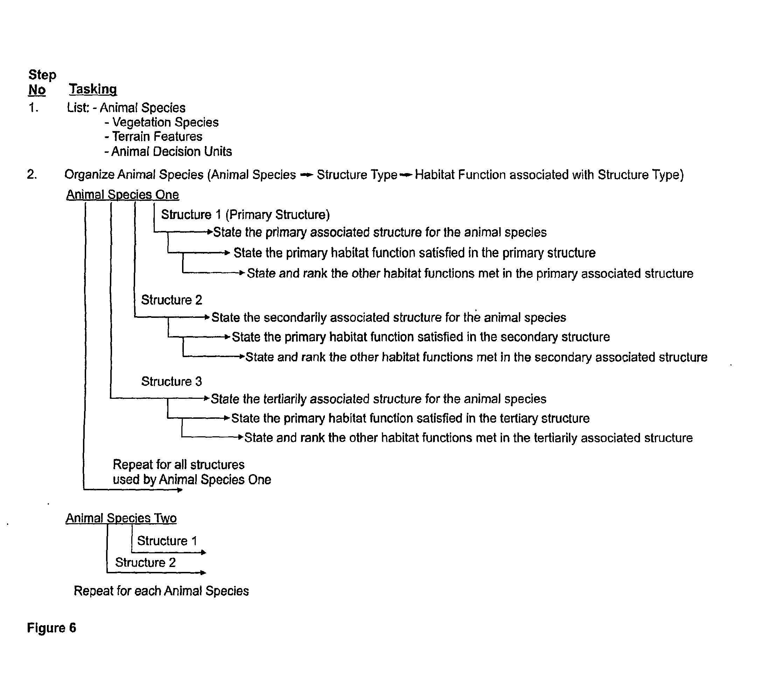

The Design Animal Habitat Guilds are determined by first specifying the complete three-way animal-structure-function relationships for each animal species (Figure 1) (Table 1) (Table 3). For each animal species, a primary structure type associated with the animal species must be stated. For the primary structure type a primary associated habitat function must be stated and ranked for its habitat support value. After this is accomplished the remaining three habitat functions are ranked for their relative value (Table 2) for the animal species in that habitat structure type (Figure 6). This process is repeated until rankings have been made for each animal species-structure type-habitat function combination. Sex and life stages are treated as species were warranted, e.g. where life cycle completion either cannot occur or would be significantly affected without incorporation of the information into the habitat design.

The forms (Table 1) (Table 3) are organised so that structure types associated with an animal species and the habitat function for that species can be listed to show associations among them. The animal species (sex) (age)-structural label-habitat function relationship characterisation forms a basis for examination followed by species clustering within determined relationship groupings. A re-examination of listed animal species and animal species groupings relationship rationales should be used to improve the characterisation specificity of the within species relationships and the consistency in structure type labelling across relationships and relationships groupings. The objective of this habitat design step is to assure that an animal species-associated structures specificity and relationship-habitat function(s) is correctly and explicitly characterised recognising that the design goal is achievement of habitat optimality for the determined grouping of animals and the specified three-way relationship.

This step of the habitat design process is not used to consider relative rankings or merit of the determined relationship's contribution to habitat functional value. The step is intended to force characterisation specificity of animal-structure-function relationships. It is also intended to concomitantly drive proper grouping and labelling of site features and animal decision units. This grouping and labelling, in turn, considers site inherent value types, associated habitat guild groupings and the confirming animal decision unit types occurring in the inherent value features (Table 3). Other animal decision unit types and not occurring on the site but required for habitat optimality must be listed at this time for consideration during design.

Step 2 Conformance: Conformance Opportunity 1: This first conformance opportunity is used to assure that all participating design professionals understand the habitat design process and the extent to which and when their designs will be exposed to habitat design related examination and change. All design products at this point are preliminary and conceptual. They probably best express the designers' pre-habitat design related understanding of the relationship between a site situation and the application of their professional skills. In this conformance step the suite of Design Animal Habitat Guilds are presented to demonstrate where and how they will affect design and where other designs may affect the habitat design. Conformance then ensues.

### STEPS 3 & 4 Overview: Development of Internal Products

Steps 3 and 4 are internal to the wildlife management profession. They require no communication with or inputs from other design professions. In these two steps the Design Animal Habitat Guilds are, first, attributed as required for achievement of habitat design optimality (Figure 2, Step 3). Then, the attributed data and information are converted into interim products. From these interim products design end products or deliverables are produced (Figure 2, Step 4).

Step 3 requires intensive data input. The data characterise the relationship of those individual animal species comprising a Design Animal Habitat Guild, mapping unit type and its associated and prioritised habitat functions. Animal behaviour linked features that affect mapping unit animal occupancy, density and utility as habitat are considered in this step.

Step 4 consists of two related tasks. First, the value of the relationships among vegetation species, habitat functional value and mappable units are recast to support habitat design requirements. Second, a one line Boolean statement is constructed using the data compiled in Step 3. The Boolean characterises that best minimal set of structural units most likely to result in achievement of habitat optimality for that particular Design Animal Habitat Guild. These two interim products drive the development of four of the five habitat design process end products.

### STEP 3: Attribution of Design Value to Design Animal Habitat Guilds

The Habitat Guild Requisites Template is one of two primary data repository types for design support. It is a primary decision support tool within the habitat design process (Table 4). A template is required for each Design Animal Habitat Guild.

During attribution, habitat characterisation data are compiled, reviewed and used as a basis for a ranking the habitat function support value relationship between an animal species and the mapping unit types comprising its habitat (Table 4).

The animal species comprising a Design Animal Habitat Guild (Table 3) are listed (Table 4, Columns B and C). The mapping unit types comprising its habitat are listed (Table 4, Rows 6 & 7). The guild composition and Mapping Units Type and label standardisation are determined in Tables 1 and 3.

The rankings matrix (Fig. 19, Table 4, Cells K-19 through AX-62) is completed from the literature and using professional opinion where data are either missing or deficient. A comment can be placed in each cell citing either the source of support for the ranking or referring out to a citations repository. Data tracking is used as a part of benchmarking.

Based on the foregoing, a relative value ranking (Table 2) is assigned for each habitat function (f, b, n, r,) within each animal species-mapping unit type relationship. The habitat function specific rankings can be summed to form a mapping unit type habitat function support index at the mapping unit type level (Table 4, Column O and others with a Σ).

Three habitat function rankings are summated per mapping unit type (Table 4, Rows 8, 9 & 10). Further, the sequence of sorting within each mapping unit type is assigned a number indicating the relative importance of a function for achievement of habitat optimality for the mapping unit type for that Design Animal Habitat Guild. This within mapping unit type sum (Table 4, Columns O, T, ...) dictates the relative value of each mapping unit type for each animal species associated with the Design Animal Habitat Guild. Across mapping unit type comparisons of the same summation scores (Σ) indicate the relative habitat functional value of each mapping unit type. The summation of within mapping unit type rankings suggests the relative importance of each mapping unit type for inclusion in a Habitat Boolean for the Design Animal Habitat Guild (Table 4, Cells O-62 through AX-62).

The mapping unit type ranking summations are further summarised as the Across Mapping Units Functional Value Synopsis Scores (Table 4, Columns AY-BC). These are both habitat function specific summaries of rankings and a "Sum of Sums" score. When sorted by ranking score or by the sum of ranking scores, these scores show those animal species and the sequencing of species having habitat functions best met by the mix of mapping unit types. This sorting by degree of service or support provided can be varied to select animal groupings receiving similar and/or different levels of habitat functional support.

The degree of generic association between an animal species and mapping unit type is ranked (Table 4 Column D) (Fig. 17, Table 2). This professional opinion synthesis based ranking affords another and simple means to sort animal species according to their degree of association with a Design Animal Habitat Guild. Bases for assignment of ranking scores may differ. However, this ranked expression of (1) opinion and (2) related applicable data is subject to cross checks within the form (Σ and ΣΣ) and by inputs from others.

These Degree of Association scores can be sorted. The resulting pattern of rankings forms groupings of species that vary in degree of association with or fidelity to the Design Animal Habitat Guild. This animal species ranking sequence and its sets of association groupings can be compared with those of individual Mapping Unit Types as well as those contained in the Across Mapping Units Functional Value Synopsis. Based on comparisons among these sort outcomes the choices of Mapping Unit Types to be used for a Habitat Pattern Map formation and a logic processes associated with prior decision sequences can be reviewed to select those Mapping Unit Types delivering an increased likelihood of achieving habitat optimality. These highest ranked Mapping Unit Types will be used to form the Habitat Booleans for each Design Animal Habitat Guild Habitat Pattern Map.

The data filled set of Design Animal Habitat Guilds form the core of the wildlife professional's participation in the habitat design process. The number of animal species selected for a site and its regional context is a relatively limited and fixed design process starting point. In contrast, properly delimiting terrain features based on those inherent value attributes driving habitat functionality requires understanding of structure-function relationships at the level of specific soil-plant-animal interactions. Therefore, Step 1 data capture and site characterisation decisions have a decided effect on the Step 4 output products. The outcomes of options for the varied sorts and ranking sequences associated with the set of Design Animal Habitat Guild Templates offer an opportunity to examine the appropriateness of these early actions. They also serve as indicators of the utility value of spatial, structural and functional aspects of the final design. The achievable degree of habitat optimality is strongly affected by the expertise associated with the content of this form and its relationship to the site's inherent determinants of habitat functionality.

The form serves both as a basis for design and as a benchmarking tool when assessing progress toward optimality. The structure-function-animal relationship represented in the form can be tested for efficacy by measuring animal presence and usage attributes. Testing can occur at the detail level of any within the cell ranking or out to any sort grouping. Upon completion of attribution the Design Animal Habitat Guild Habitat Guild Requisites Template becomes the data and information source for development of interim products leading to final products useful for habitat design.

### STEP 4: Production of Interim Products (IP)

IP 1: Habitat Pattern Map Booleans: - A Habitat Pattern Map Boolean is a logic statement composed of highest ranked, closely associated mapping unit types narrowly defining a habitat area for a Design Animal Habitat Guild (Table 4, Line 9). The Habitat Pattern Map Boolean, when applied to the mapping unit types of the Terrain Features and Habitat Guild Decision Units Map, defines a Habitat Pattern Map for a specific Design Animal Habitat Guild. Each Mapping Unit Type is used only once among all Booleans. This prevents spatial overlap among Habitat Pattern Maps for the set of Design Animal Habitat Guilds.

IP 2: Habitat Function Support Value Ranked Vegetation Species List: - The Habitat Function Support Value Ranked Vegetation Species List (Table 5) is the second and other major data repository type and decision support tool within the habitat design process. Within it the vegetation species best supporting achievement of habitat optimality are associated with the Design Animal Habitat Guilds at the level of individual habitat functions. All vegetation species occurring in the region and adapted to site and vicinity conditions up to at least a habitat sized area are ranked for their habitat function support value for each Design Animal Habitat Guild (Table 5) (Table 2). Each vegetation species is assigned a ranking value for its habitat function support value for each habitat function within each Design Animal Habitat Guild.

The value of the individual habitat functions as bases for achievement of habitat optimality vary among vegetation species and within habitat guilds. Therefore, after vegetation species are ranked they are sorted by habitat function support value within each habitat guild habitat function type to identify those vegetation species within each habitat guild that best achieve habitat optimality (Table 5, Rows I-J-K-L ... N-O-P-Q ...).

Following ranking and sorting, habitat function value support rankings can be summarised across the set of habitat functions within habitat guilds (Table 5, all columns with Σ). This determines and allows grouping of those vegetation species best serving a broader or selected range of habitat functions within a habitat guild. Comparisons among sort types are used to select those vegetation species best meeting the habitat functional requirements of a habitat guild. Summaries of rankings can also be made across a set of functionally and/or structurally related habitat guilds and used to assess value of vegetation species. Site wide rankings or rankings made across all habitat guilds, while possible, begin to blur high-value habitat guild related uses of vegetation species. These generalist rankings do serve as a means to compare general recommendations for plantings to laity for "backyard wildlife" or "indigenous" values with this more formalised approach to value determination.

From the ranked and sorted Vegetation Species List a set of Design Animal Habitat Guild specific Vegetation Planting Palettes is subsetted (Figure 4).

IP 3: Vegetation Cover Types, Terrain Features and Habitat Decision Units Map Legend: - This legend is compiled using column headings contained in the Vegetation Cover Types List and the Habitat Guild Requisites Templates. The legend listings correlate with the terminology and mapping units contained in the Habitat Guild Specific Habitat Pattern Map Booleans. The vegetation cover types used in a habitat design can be of three types. The types can:
(1) Closely mimic a naturally occurring cover type in composition, form and function,
(2) Be a conventional appearing landscape architectural product from a human perspective but be constructed using high habitat function support value components, or
(3) Be a strict design construct of that vegetation species mix delivering a highest possible habitat functional value density in expectation that it will result in optimal habitat.

The natural system mimics potential for self-organisation with its consequent structural and functional stability and resilience. These would tend to be large area systems having a relatively low money density with a probability of low-level extensive management inputs. For these system types the Vegetation Planting Palettes and Habitat Supplements Handbook would likely be used for habitat improvement without the use of a significant, if any, habitat design component.

The dual functionality content of vegetation species used in the landscape architectural approach would likely be the most frequently used design approach. For this design approach a design impetus and budget would exist. Long term management under conditions of design and budget would be likely. Once Vegetation Planting Palettes that are suited to a region enter general usage, presumably following an initial designed application, the design community's familiarity with their content is likely to result in a shift in planting specifications toward higher habitat function support value species. Ease of recognition within the design community and within the lay community of vegetation structural unit types will make selection of appropriate habitat guilds a simple activity.

The third option for constructing this map legend is more problematical. It may be more necessary. Habitat is a variable. Current natural vegetation associations and their associated mixes of animals are subject to and will change. Just as Clementsian succession was replaced by directed succession, current apparent stable associations are shifting due to fragmentation effects and climate change. This habitat design protocol offers a means to characterise new conditions and design accordingly. The new conditions and vegetation species mixes may warrant new and different labels. Limitations such as money, human effort, roadways, rivers and other barriers suggest that animal decision unit groupings be developed considering future structural unit and terrain feature conditions. Further, these groupings may have to function at a higher level while in close proximity to human activities with their high money densities and likelihood of long term management. Associations of these groupings of high habitat functional value vegetation species tailored to possible near future conditions should perhaps be a priority for present-day plantings.

Having presented the circumstances that may affect labelling of these spatial units, other factors affecting labels warrant attention. The terms Mapping Unit, Terrain Feature, Structural Unit, Animal Decision Unit and Habitat Decision Unit have distinct meanings, relationships and applications (Fig. 21, Table 6). They have been used to indicate clarity of purpose for actions taken at different points in the habitat design process.

The design process begins with a focus on the loci for inherent value in terrain. These loci are most likely to be a Terrain Feature which is a type of mapping unit. It would be presumptuous, and perhaps derailing of design intent, to assign either a structural unit type or animal habitat decision unit types to a terrain feature at the outset of the design process. Therefore, adherence to fundamental determinants of inherent value was sought as a decision base for determining initial mapping units. Vegetative structure would emanate from these inherent value loci in most cases. Vegetative structure types have good correlation with the inherent value. However, there is a range and amplitude of vegetative response that is possible and these, for design value, are best saddled within the context of the design process and not as the fait accompli of a field decision.

Where no vegetation exists, a terrain feature will. Therefore, the fall-back mapping convention is the terrain feature associated with an inherent value set that has habitat functional value distinct from adjacent terrain features.

An Animal Decision Unit is a small discreet space that prompts an animal action. The common actions are ingestion and egestion plus rest which is a form of action. The other common act is that of positioning. Positioning may take the form of travelling, crouching, perching or any of the many other acts that occur to facilitate opportunities for ingestion and egestion. In their broadest forms, ingestion is to take into the body and egestion is to expel from the body. In this context sex and territory related acts are forms of ingestion and egestion. Therefore, animal decision units have a habitat function and these habitat functions are summarised for habitat design purposes as feeding, breeding, nesting and resting. Animal decision units are identified by observing animal decisions or consequences of actions taken by animals. Their value to the animal is a function of nutritive value, energy conservation, service as refugia and other uses facilitating reproduction and life cycle completion.

Cataloguing of animal decision units with their functional attributes and values are best means for assuring the potential for design elements necessary for achievement of habitat optimality. However, at the outset of the habitat design process, examples of the actions of feeding, breeding, nesting and resting are best logged in correlation with a mapped terrain feature or structural unit for subsequent consideration during the design process. Information from the literature and professional opinion are also useful in constructing the Animal Decision Units portion of the map legend.

For design utility, Animal Decision Units are aggregated by habitat function type then associated with a structural unit type. This composite source of opportunities for a type of animal action to be used to meet a life requisite is labelled a Habitat Decision Unit for habitat design purposes. Habitat Decision Units will be most often mapped as a structural unit type without mention of the habitat function(s) served. In other instances, separate mapping may be warranted if the unit is of distinct value or is not customarily associated with a mapped structural unit. In explanation, a feeding Habitat Decision Unit for a small to medium-sized carnivore may be a patchy dense grass area. This structural unit may or may not be a mapping unit depending on map scale and the bases used to establish the relationship between Design Animal Habitat Guild member species, a mapping unit type and the linked habitat function.

Based on the foregoing, the Vegetation Cover Types, Terrain Features and Habitat Decision Units Map Legend must be composed with a clear understanding of the relationship among the initial site mapping units, animal decision units and their aggregation in the structural units within which habitat functions are met and life requisites satisfied.

IP 4: Vegetation Cover Types, Terrain Features and Habitat Guild Decision Units Map: - This (Figure 2, Step 4) is a synthesis of two production streams within the habitat design process. It combines the map legend of the same name with elements of the mapping unit types (Table 4) used for Design Animal Habitat Guild Booleans and the terrain features map (Figure 2, Step 1) to produce the map to be used in the habitat design.

The Terrain Features Map contains the spatial units forming the base of the Vegetation Cover Types, Terrain Features and Habitat Guild Decision Units Map. The map legend has the labels applicable to the map unit types. Any modifications to or specialisation of mapping units terminology required for habitat guild Boolean development would be recorded in the Design Animal Habitat Guild Templates (Table 4). Vegetation cover types are reintroduced as label types for use in this map. However, as explained in Step 4, these labels may or may not represent conventional vegetation cover types. For this map and the subsequent design these labels are new terms of convention for the vegetative structural unit types and vegetation species associations that will be planted and developed on the site Terrain Features and Habitat Guild Decision Units. The labels should provide ease of reference and communication for future managers and beneficiaries of the site while reasonably characterising the spatial units comprising the site.

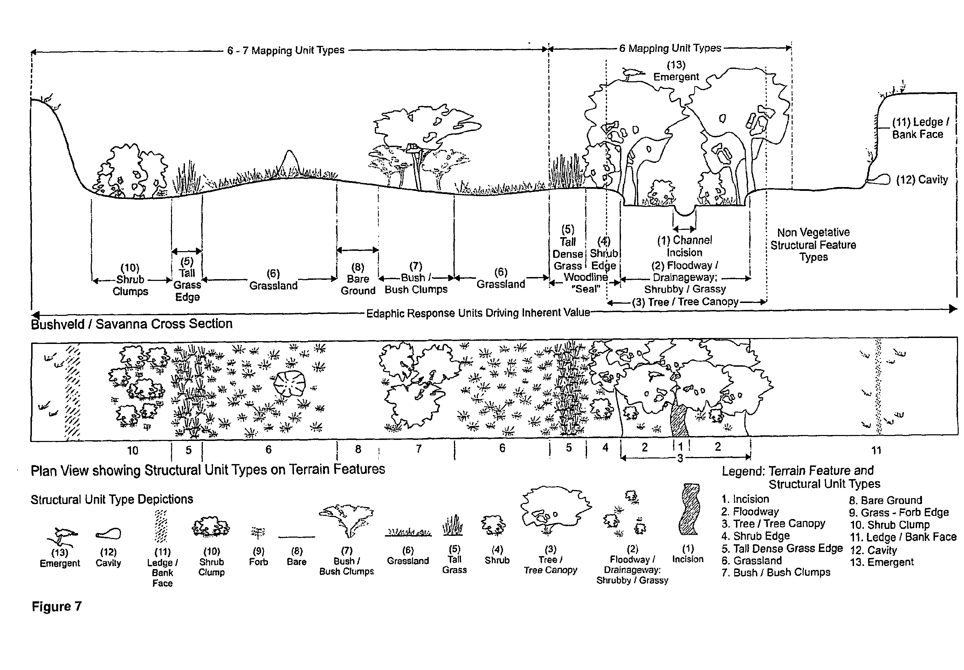

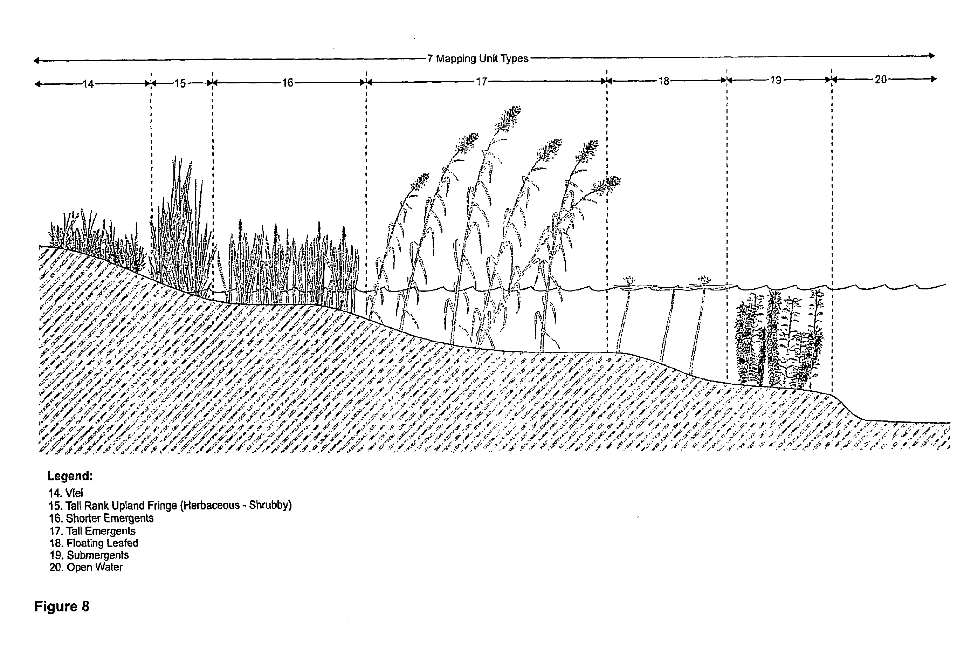

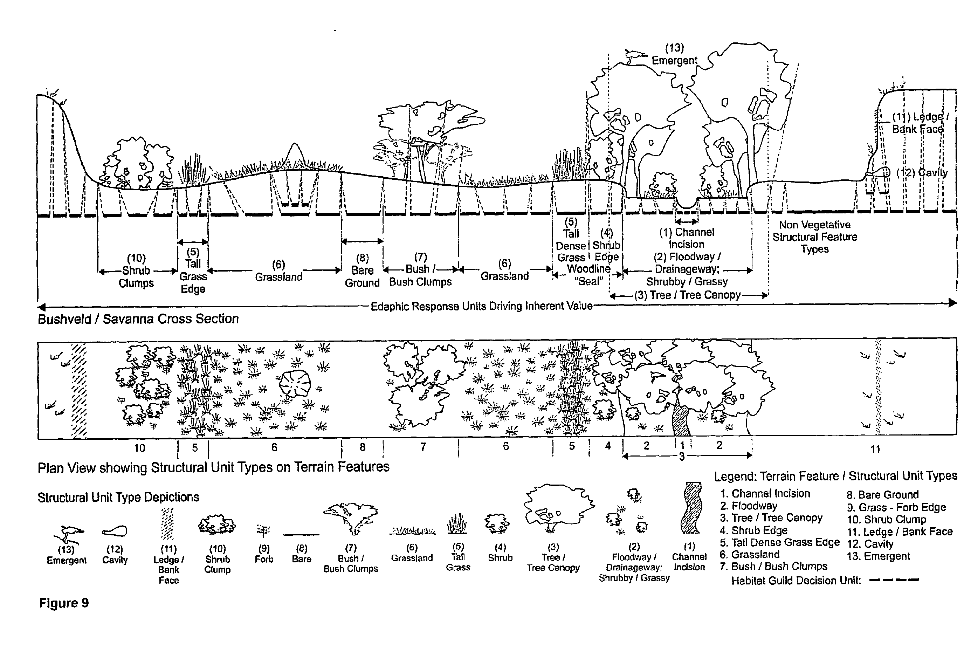

No structural unit type labels are used as labels for this map. However, Structural Unit Types do influence decisions concerning Mapping Unit Types and Terrain Feature characterisation. Any vegetative structural unit type is probably a subset characteristic of a vegetation cover type used as a mapping unit label. Structure is a primary determinant of function. There is the need to simplify and minimise the number of structural unit types that could occur in a habitat design and do so in the context of terrain feature types (Figure 7, Figure 8) with their associated subsets of vegetative structural unit types (Figure 9).

IP 5: Conformed Vegetation Cover Types, Terrain Features and Habitat Guild Decision Units Map: General: Conformance requires two types of actions. First, it requires the removal of spatial overlap among the Habitat Pattern Maps for the Design Animal Habitat Guilds. Spatial overlap among the Design Animal Habitat Guild Habitat Pattern Maps must not occur. Similarly, spatial overlap must not occur between the Habitat Pattern Maps area and the area occupied by the other project designs. Second, this conformance step is used to obtain the extension of the habitat design into and onto the features of the other design types.

An acceptable conformed Vegetation Cover Types, Terrain Features and Habitat Guild Decision Units Map is a function of virtually al preceding tasks associated with the habitat design process. However, as a basis for explaining the conformance process only the relationship between landscape architectural design and the habitat design will be treated in detail for each of the interim and final products associated with the habitat design process.

Civil Engineering - Habitat Design Conformance: Civil engineering infrastructure design and habitat design are conformed in two primary ways. First, conformance occurs through incorporation of habitat features into engineering infrastructure. Second, habitat value is added to pervious surface areas associated with hardscape or impervious surface areas. Transport corridor habitat related modifications such as animal specific designs for overpasses, underpasses, roadside plantings, bridge modifications, infrastructure add-ons and add-ins, etc, are now accepted practices with production of standardised designs. More recently web pages have been initiated for communication of current state-of-the-art and practice. However, these current practices are primarily a result of regulatory requirements rather than portions of a deliberate habitat design. Further, they tend to cater to requirements of large animals or seasonal pulsing of animal movement. Routine movements and activities of most animals are still not a consideration for infrastructure design except for certain major structure types. Significant opportunities exist for many more types of and density of interventions to facilitate habitat functionality relating to engineered features within the built environment and within areas undergoing land-use change. Design conformance between habitat and engineered infrastructure within the habitat design process is intended, first, to emphasise the elimination of obstructions to access to habitat and, second, to opportunities within the engineering environment wherein these modifications become a functional components of habitat without impeding either habitat or engineering design.

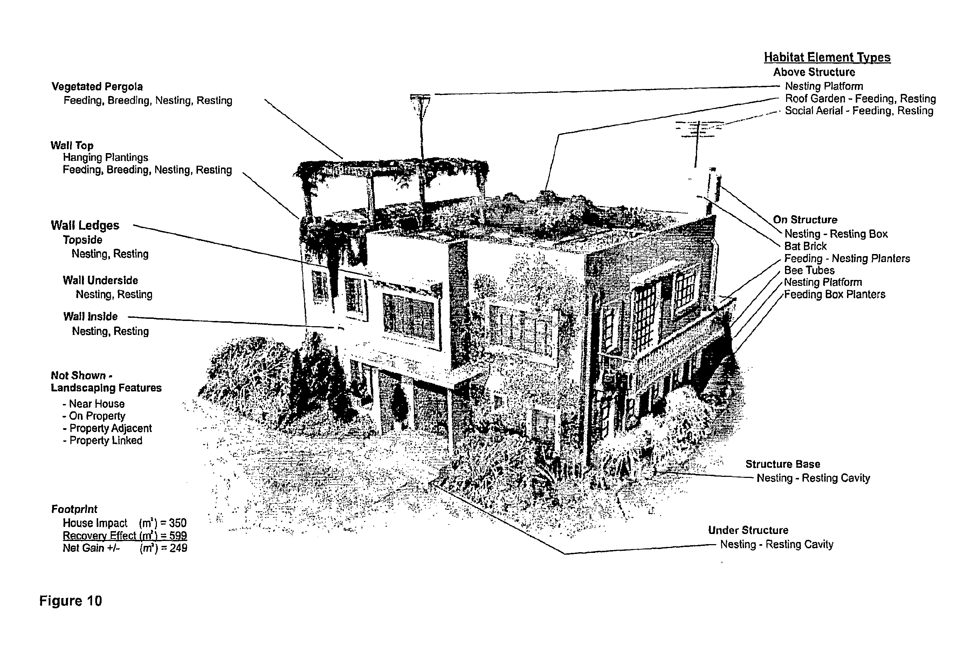

Architectural - Habitat Design Conformance: - Architectural structural modifications adding habitat value plus Habitat Supplements as add-ons and add-ins to built structure as design components are desirable. Opportunities for the installation of these structures begin above rooftop level, extend through each structural feature type and terminate with below ground habitat structures (Figure 10). A successful conformance opportunity should add both habitat value and architectural value for each point or feature examined for conformance opportunities.

The civil engineering and architectural interfaces with habitat and with habitat design occur on surfaces and extend well within the structures both as elements of design and of operation. The civil engineering incorporation of natural systems functions into design has tended toward acceptance of and incorporation of regulatory compliance with its concept of avoidance of impact and mitigation of affects. Architecture has remained further removed from incorporation of animal based habitat and habitat design into its structures. Incorporation of green roofs, passive heating-cooling, green buildings and other techniques and standards have fundamentally been a process of incorporation of environmental related structural design standards into architecture. This is significantly different than considering architectural structures as a component of or a structure on and into which to place a habitat design component then have it serve as an extension of or integral part of a natural system.

Both animals and plants, to include listed species of regulatory interest, have colonised architectural features not designed for them. Conformance requires consideration of this both to achieve full design integration and to achieve the animal based habitat potential of architectural products.

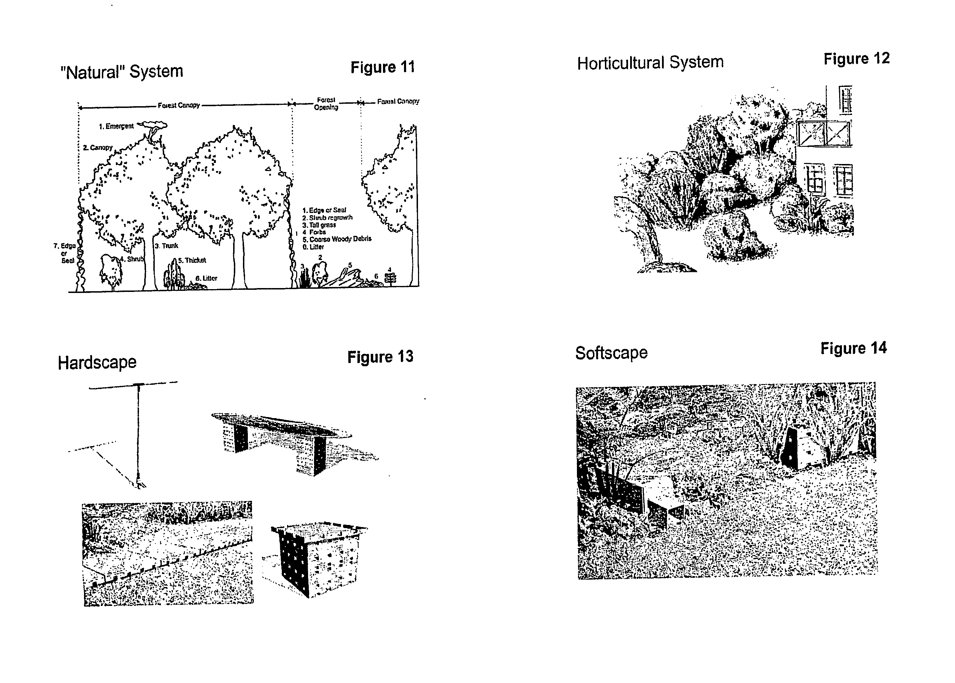

Landscape Architecture - Habitat Design Conformance: - The relationship between landscape architecture and habitat is more complex and involved than that for the relationships between habitat, architecture and civil engineering. Landscape architecture has more points and types of contact with natural systems than do the other two professions (Figures 11 - 15). Landscape architecture deals with natural systems, horticultural systems and the hardscape associated with the intrusion of humans into natural systems. Landscape architectural design and habitat design can have a range of spatial overlap varying from total to none. Options for conformance also vary. Placements of habitat function within landscape architectural features can range from applications that are obvious to the lay observer to those that appear to be and are visually conventional but are also fully integrated functionally, spatially conformed and have high functional merit for both animal and human users of the design. Each design conformance task offers an opportunity for increased design integration while maintaining the design objectives of both parties.

The extent of conformance achievement and type varies with the location of the project site along the "fully natural to fully developed" gradient (Figure 15). It also varies when considering the ratio of pervious to impervious surface area in the design. Land-use also affects opportunities for types of design outcomes. Design integration can be partial or complete. Design products can similarly be used in a stand-alone or a melded approach. In pursuing a complete habitat design process and taking full advantage of conformance opportunities the following design process with its intermediate and final design products are points and types of communication between these two professions.

### LA - Habitat Designer Step 1 Communication Opportunity: - Terrain Features and Animal Decision Units List

From an animal habitat design perspective, the Terrain Features and Animal Decision Units List (Figure 2, Step 1) is compiled considering animal species, their decision units, vegetation species and cover types that could occur within the design and larger area. The lists and animal groupings within the list are affected by habitat design related decision-making and by a landscape architectural decision-making. This Step 1 Communication Opportunity forces consideration of the extent to which species that could occur will occur following installation of the design and buildout both on the site and in the region surrounding the site. The compilation offers a first opportunity for communication concerning both habitat design and landscape architectural input. Divergence between habitat design goals and landscape architectural design goals are acceptable and expected.

From a landscape architectural perspective a Terrain Features and Animal Decision Units List is also of interest at this point in the process. Humans, as an animal type, will pass through, make uses of and decisions within the landscape. The features on which they move, rest and play will tend to be constructed of hard and impervious, high thermal stability materials. Such materials have merit as Habitat Supplements if cavities, ledges and other features designed for animals are built into and on to them. Customarily, at present, they are not. However, in the intensely managed and maintained systems associated with high human density and usage intensity, it is these designed built-in materials that are unlikely to be lost from the system. Therefore, while cavities and cavity opportunities are routinely and systematically removed from this landscape, from agricultural landscapes and for natural landscapes, they can be added, to the extent practicable, into features used by humans with an expectation of their retention and management.

Similarly, if landscape architects are made aware of opportunities to design in structures promoting human interest in surroundings, they will probably design them. In this circumstance, deliberately designed perches, nest boxes, watering and other habitat related opportunities that would be removed as threats to public safety and well-being if occurring naturally, can be placed in a habitat context with reasonable assurances of long-term budgetary and maintenance support. Step 1 offers the opportunity to create this interest.

### LA - Habitat Designer Step 2: Conformance Opportunity One: - Animal Habitat Guilds and Design Animal Habitat Guilds:

The first formal conformance is the last task within this habitat design step. Gaining an understanding of in-common and divergent design goals will promote a more complete listing of animal habitat guild types and an improved determination of Design Animal Habitat Guilds. Again, a distinction between design intended to achieve habitat optimality and design having other purposes should be made and understood by all parties to the design process.

The group of Design Animal Habitat Guilds can be modified to include guilds satisfying particular landscape architectural design goals. The original or initial design intent was habitat optimality. However, humans are a habitat component and delivery of pleasure to humans is a valid habitat design objective. Habitat guilds can and should be designed to provide this function. It is also necessary to convert a certain percentage of the humans into knowledgeable, skilled, in perpetuity, habitat components providing management and maintenance functions outside of formal programs. Habitat optimality cannot be achieved without this input type and without a certain level of these inputs sustained through time. Having habitat guilds that serve to capture and entrain humans as part of functional habitat to serve these objectives is a design requisite.

The human capture and entrainment process for habitat design purposes begins on, within and/or adjacent to hardscape or impervious surfaces where humans are most often found. Their initial capture is best accomplished using a visual attractant. Motion, colour and out-of-context objects are primary visual attractants. Entrainment is a function of an induced emotion-based response and/or an interest-based reaction. The initial capture related contact with habitat must be followed by an entrainment process or a series of opportunities to deepen the feelings and interest generated at capture. The last stage in this process is entrapment wherein the person chooses to remain in a high-value relationship with a natural system. This process of involvement and commitment has been presented as a transition with a person beginning as a novice and ending as connoisseur, wherein beginning interest of "What is that?" becomes over time a thorough knowledge of and an interest in animal behaviours. Design of obvious visual focal points to begin the transition and gain better natural systems through a higher value directed human participation to retrieve and up optimal habitat would be an improvement over current approaches in which habitat is construed as entertainment or put added distance as sacred. Design Animal Habitat Guilds can be used to further these or other ends. How design conformance is achieved can affect the habitat-human interface and the society's individuals located on either side of the interface.

LA - Habitat Designer Step 4: Conformance Opportunity 2: - The Interim Products (Table 1, Step 4) are primary points for checking design conformance between the landscape architectural and the wildlife management habitat designs. This formal conformance task does not substitute for collaboration opportunities during the production of the interim products. This conformance is a full formal end-of-step conformance activity taken to assure that the full range and extent of design conformance opportunities has been taken that will best promote achievement of habitat optimality.

LA - Habitat Designer Step 5: Conformance Opportunity Three: - Vegetation Planting Palettes: These can be used as freestanding design process deliverables apart from any other habitat design end product. They are suited for use by lay and professional persons elsewhere in the design region as guidance in conventional landscaping. They can be derived initially as an end product from a complete design process to allow testing of their breadth and depth of utility.

The Vegetation Planting Palettes for each habitat guild can be tailored for added usage by incorporation of landscape architectural design criteria. Vegetation species having high aesthetic appeal, height categories, smells, habitat appeal for specific animal categories, suitability for particular land uses, and other design categories can be derived for design use.

Habitat Supplements: For landscape architectural purposes Habitat Supplements are desirable both as in-sight and as out-of-sight objects. They constitute points of interest and are visual focal points due to their out-of-kind appearance. They serve as beginning points for the human interest and conversion process for human involvement with habitat design either as receivers of pleasure or as candidates for becoming long-term habitat components. In many cases the functional utility of Habitat Supplements can be combined with design effects or the products of other professionals to achieve landscape architectural, architectural and engineering goals without diminishing the utility of the Habitat Supplement. This multipurpose utility should be discussed and exploited for its market related value, its habitat value and for its potential to attract and convert humans into service as habitat components.

Habitat Pattern Maps: These are one of the primary tools resulting from design. They direct and support the subsequent installation, management, maintenance and benchmarking activities that will support progress toward habitat optimality. Areas and features within Habitat Pattern Maps may have landscape architectural goals and a features composition that diverges from the pure design habitat optimality related intent of a Habitat Pattern Map. However, one function of conformance is to push, to the extent practicable, the achievement of both purposes within a common area.

### STEP 5: DELIVERABLES

There are five formal deliverables from the habitat design process from a wildlife management perspective. These are:
(1) Habitat Guild Specific Vegetation Planting Palettes,
(2) Habitat Supplements Location Map,
(3) Habitat Spatial Design Units, a
(4) Habitat Supplements Handbook, and a set of
(5) Conformed Habitat Guild Specific Habitat Pattern Maps.

Each of these has been discussed in the aforegoing concerning landscape architectural conformance. Their content and utility is a function both of site design requirements and the potential for use in the larger surrounding area.

Step 5 Conformance: Conformance Opportunity 3: - Deliverables represent a point-of-transfer. Their completion represents the end of the habitat design process and the beginning of the process of habitat optimisation and initiation of activities by the group of persons having various responsibilities associated with achievement of habitat optimisation. As a consequence, this conformance opportunity is a final chance to assure that the deliverables represent a best chance for achievement of habitat optimisation and that the documents will serve as an efficacious means for its achievement.

The design process deliverables should be handed over with an accompanying set of documents detailing the performance requirements and standards for the groups and persons responsible for achievement of the design intent. The receiving parties include: (1) a habitat owner, (2) a habitat manager, (3) habitat maintainers and (4) habitat benchmarking specialists.

These types of persons either do not exist at present as professions or, otherwise, are probably only partially qualified to assume their responsibilities. As a consequence, in addition to the habitat design deliverables, handbooks are to be supplied, tailored to their users to ensure success based on the skills and understanding of their intended audience.

### Examples

The Function-based Habitat Design process (FBHD) (Figure 2) is suited for application over the range of conditions occurring from natural through intensely developed systems. The process is intended for ease of application in design processes by laity, those in the design professions for the built environment and by natural systems professionals. As a first step (step 1) inherent site value features are captured to determine optimal habitat functional value. These values (captured as terrain features) determine habitat functionality when assigning final design features and criteria to spatial units (Steps 4 and 5).

These spatial units and related end products are recognised and routinely used by the types of professionals responsible for the planning, design, installation, maintenance, management and benchmarking of the natural and built environments.

The technical core of the design process is obtained from the refereed literature and each data cell is referenced. The design support tools or in products from the habitat design process become suited for "compile once - apply repeatedly" usage (Figure 2 Step 5). This is similar to uses made of reference and design sources for other professions.

For this initial trial application of the FBHD process both completion of the core technical content form (Figure 2 Step 3) and conversion of its content into design support tools and a design are presented (Figure 2 Step 5).

**Working Example: Development of a low density housing estate,** covering 176 ha and including 160 1 hectare private properties and communal facilities as set out in Fig. 23, Table 7 and the development plan of Fig. 22. Stand-scale architectural and landscape architectural designs were the responsibility of individual owners. A project scale FBHD was completed. A single stand-scale habitat design was conformed as a subset design of the project scale design. Architectural and landscape architectural designs were conformed both to the stand owner's wishes and to the stand-scale habitat design (Fig. 24). The procedure of Fig. 2 was followed:
Step 1: Records of vegetation occurring in the area and of animal species common to and suited to the area were obtained. Site terrain feature types, including distinctive vegetation cover differences, and animal decision units were listed.
Step 2: The data were organised into "Most Obvious Associated Structure Unit Type" associated with each animal species (Fig. 25, Table 8 Column E). Structural units (SU) associated with animal's habitat requirements were listed, Table 8 Col. N-AG and a ranking assigned (Table 8 Cell N6 and beyond). The site was noted for its lack of active larger animal decision units. The four habitat functions were ranked (Fig. 19). One function was picked as part of the candidate guild label components (Fig. 25, Table 8, Col. 5) for being most likely to result in designed habitat optimality for that animal species. In contrast, the animal species name portion of a Design Animal Habitat Guild (DAHG) label is that species name best serving to convert humans into knowledgeable, long-term efficacious habitat components (Fig. 24). The ranking of a Mappable Unit Type (MNT) suggests its relative contribution to design habitat optimality and is used for the DAHG Boolean construction process, Step 4.

Each column is sorted, followed by a row of species sorts denoting a best suite of candidate DAHGs and appropriate DAHG labels (Table 8).

The following summarises the rationale for the evocative animal species name choices and candidate DAHGs label construction:

### DAHG No. 1: Lesser Bush Baby, Bush Canopy Feeder Habitat Guild (1. LLB BC F HG), Sort FNR

The species, Lesser Bush Baby (*Galago moholi*), has high recognition value by professionals and laity: charismatic, immediate association with canopy structure; positively affects human behaviour. Table 8 (Fig. 25) lists animals typically and closely associated with this DAHG.

Bush Canopy: easily recognised, mappable primary SU type, suitable for routine usage, land use design and change management.

Feeder: Acacia gum is a bush baby life requisite (feeding), most critical of the four habitat functions. The nesting support is the next best habitat function support value. Habitat guild: included with each DAHG label, as label for a particular type of design product.

### DAHG No. 2: Tawny-flanked Prinia Patchy Emergent Wetland Nester Habitat Guild (2. TFP PEW HG), Sort NFR

The Tawny-flanked Prinia (*Prinia subflava*) attracts strong attention in the field, nesting in a wetland; positive market value and of interest to lay persons. Its wetland nesting habitat is an inducement to perpetuation thereof by management, rewarded by excellent aquatic viewing benefit from the housing or development area.

Patchy Emergent Wetland: very high diversity-complexity. The DAHG label implies the vegetation structural unit mix aimed at as a management end product, near shore and property proximal, where these SU types occur.

Nester: the Tawny-flanked Prinia nest, as a benchmarking criterion, dictates an aquatic structural unit mix for management toward habitat functional optimality and perpetuation of habitat quality. It optimises support for fish, invertebrates, herptiles and birds occupying this SU type.

### DAHG No. 3: Fish Eagle Open Water Feeder Habitat Guild (3. FE OW F HG), sort FNR

The African Fish Eagle *(Haliaeetus vocifer*) is a large, visually obvious, widely recognised, charismatic species; a food web top carnivore, vulnerable to pesticides, eutrophication and aquatic system maturity, therefore suited as the evocative animal species name of this DAHG, forces awareness of reasons for its occurrence; adapts quickly to easily installed Habitat Supplements (feeding perches and nesting platforms) near human activity and observation nodes.

Open water: a major habitat design SU type having major aesthetic and thus economic potential. Also benefits many other aquatic species.

Feeder: design focus on the aquatic food web - large fish, clear water. Nesting habitat function of second primary importance (offshore nesting platforms for waterfowl, sub-surface Habitat Supplements for other aquatic species).

### DAHG No. 4: Grey Duiker Dense Bush Breeder Habitat Guild (4. GD DB B HG), Sort BRF

The grey duiker (or common duiker - *sylvicapra grimmia*) has widespread general recognition and charisma with broad lay understanding of its association with dense cover (bush).

Dense Bush: a major standard structural unit type. Dense bush and its structural equivalents are important screening and privacy providing structures.

Breeding: This habitat function provides mating rituals/behaviours and copulation. Breeding is distinct from nesting; dense cover is a common locus for breeding related activities for many species. The resting habitat function is the second most important.

### DAHG No. 5: Freshwater Crab Water Edge Feeder Habitat Guild

The Freshwater Crab (*Potamonautes spp)* was chosen as part of the guild label, because it is a primary food source for otter in South Africa and people are interested in otter. The designer and management objectives of the invention are served by this choice because crab function best in clear unpolluted water. Homeowner interest in otter is an incentive to manage water quality.

Water Edge: Plant material, aquatic, at water's edge or immediate vicinity is needed as a food source for the crab. Emphasis on this affords opportunities to manage unwanted sediment and stream pollution.

Feeder: Lack of water persistence at the test site dictates emphasis on the crab, its food supply and survival in burrows under dry conditions; therefore a resting habitat function is a second most important design habitat function.

### DAHG No. 6: Small-Spotted Genet Bushveld Breeder-Rester Habitat Guild (6. SSG BV BR HG), sort BRF

The Small-Spotted Genet (*Genetta genetta*) uses cavities in trees and bush; readily habituates to human habitat and presence; source of pleasure and problems. As a DAHG label component, it forces attention to woody cavities in designing and managing.

Bushveld: wood cavity uses; bush as mappable unit type

Breeder-Rester: a dual habitat function, woody cavity criticality for many species of this habitat guild. Feeding habitat function ranks third in importance.

### DAHG No. 7: Yellow Mongoose Bushveld Feeder Habitat Guild (7. YM BV F HG), sort FNR

The Yellow Mongoose (*Cynictis penicillata*) is a generalist feeder occupying a group of primary structural unit types. This habitat guild emphasises managing this major vegetation cover type and rock and rocky cavities. Fine and coarse grain-sized design area maps to be combined with extensive and intensive habitat installation and management for habitat optimality.

Bushveld: a structural unit mix chosen to emphasise inclusive and extensive approach to habitat characterisation and design.

Feeder: management priority guild occurs through and feeds using virtually all bushveld structural unit types. Second habitat design priority is nesting. Rock and rocky cavities as refugia against fire and weather. Limited availability, increasing need with time.

### DAHG No. 8: Porcupine Savannah Rester Habitat Guild (8. P S R HG), sort RFN)

The porcupine *(Hystrix africaeaustralis*) is widely and easily recognised and of interest. Ground or ground level creator and below ground level modifier of cavities.

Savannah: same structural unit types as bushveld.

Rester: Porcupine cavities suited for use by other species. Habitat guild includes all savannah occurring users of ground level and below ground cavities. Feeding function secondary high priority.

### DAHG No. 9: Common Hottentot Butterfly Larvae Grassveld Feeder Habitat Guild (9. CHBL GV F HG), sort FNR

This species (*Papilio niso niso*) and use of its larval life stage, was selected because these larvae feed on Red Grass (*Themeda triandra*) which is a decreaser species, high in crude protein and an easy to recognise indicator of high-quality grassland as a design and management tool.

Grassveld: focus on grassveld mapping unit type and its included structural unit types of the savannah biome or bushveld complex on the application site (spatially dominant vegetation cover type, negatively affected by homeowner's interest in planting trees). Therefore monitoring needed.

Feeder: grassland primary food source for many animals; nesting usage common.

The next three DAHGs were selected and constructed only for application on a single stand high detail scale (1 hectare) in contrast to the previous focus on the entire 174 hectare project. This required a shift in grain size of mappable units.

### DAHG No. 10: Banded Mongoose Acacia Shade Feeder Habitat Guild (10. BM AS F HG), sort FRN)

The banded mongoose (*Mungos mungo*) is associated with wooded savannah and termite mounds, hurries across open spaces, favours undergrowth and is of human interest. Acacia Shade: Often populated by a number of species of forbs and shrubs serving as a resource for millipedes, beetles and other animals on which feed banded mongoose and other animals. This SU type is reasonably distinct and deserves functional optimisation in the context of the single homeowner's purview, interests and budget.

Feeder: This function, for design purposes, applies to the full range of invertebrates and vertebrates feeding within the Acacia Shade suite of structures which include the overhead canopy and vegetation in the shade zone, all meeting this as part of their habitat requirements, including the decomposers and subsoil animals, fungi, bacteria and other organisms.

### DAHG No. 11: Grey Duiker Puzzle-bush Clump Rester Habitat Guild (11. GD PBC R HG), sort RFN

The Grey Duiker (*Sylvicapra grimmia*) was chosen as an image evocative of a dense vegetative SU refugia and of physical and visual isolation from disturbance. The Puzzle-bush clump is a structure type intended for retention and incorporation into the detailed design occurring at the stand/lot/erf scale.

The Puzzle-bush clump in contrast to the Acacia Shade structural unit: This structural unit is sealed on the sides. It offers limited penetration opportunities, has the chlorophyll layer essentially restricted to its exterior and the habitat support services are a function of the Puzzle-bush structure and function rather than to any variety of associated vegetation species. Refugia for animals persisting among humans are important for achieving animal densities and intimate human proximity to animals for human pleasure.

Rester: sufficient clump size and clump side visual sealing contribute to making it suitable as a rest site. The feeder function ranks secondary and the nesting function third.

### DAHG No. 12: Vleilourie Bush Clump Nester Habitat Guild (12. VL BC N HG), sort NFR

The Vleilourie (Burchell's Coucal) *(Centropus burchelli)* is a canopy nester and rester. It prefers tall bush and bush clumps. The Vleilourie evokes a design and interest focus toward taller bush clumps and the upper portions of those bush clumps as a specific design element. This structural unit type was a significant component of the site vegetation cover for retention and improvement through management.

Bush Clumps are relatively few in number within the design space and difficult to replace if lost.

Nester: Vleilourie nests are restricted to taller bush clump structures. While this is a distinct structural unit type, many of the attributes assigned to other structural unit types are associated with this type.

As shown in Fig 25 (Table 8) animal species associated with the site and region were assigned degree of association rankings with mappable unit types, here exclusively vegetative structural types. Based on these association rankings, a suite of candidate DAHGs was constructed (Table 8, Row 162). Next, the degree of association between mammal species and design designated DAHGs was ranked and sorted for each DAHG-specific rankings sort.

In the next step 3 DAHG Requisites Templates were prepared. In this process step the data base for designing optimal habitat is established. These parameters, relationships and rankings are the technical core of a habitat design. From these data all design end products are developed and using these parameters, benchmarks are set and tested.

Each mappable unit (MU), typically a vegetative SU, is composed of different, but not equally valuable vegetation species from a habitat functional support value perspective. These vegetation species vary widely in their habitat function support potential for the species comprising the DAHG. After ranking, these vegetation species are sorted and grouped for their habitat function specific support value for each DAHG. After the listed vegetation species list are ranked, that subset of vegetation species providing the highest habitat function support value for each DAHG is selected for design usage.

Because the project site size was less than habitat size requirements for the animal species comprising the DAHGs and the habitat definition and for budgetary reasons, the habitat spatial unit sizing and habitat related behavioural criteria were not used for this application. Instead, design emphasis was placed on the DAHG Habitat Pattern Maps and the vegetation species best supporting the ranked habitat functions associated with each DAHG.

At this point in the design process, the site focused characterisation terminology is converted to spatial unit nomenclature best characterising the mature stage of the vegetative and vegetation related end products of the design process. This is necessary for ease of communication among the different design profession types and for a best future understanding of site factors and design intent as the designed system matures.

In the next step 4 design support products were identified. A DAHG-specific Habitat Pattern Map Boolean Construction was prepared (Fig. 30). Booleans were constructed for the six site-scale Design Animal Habitat Guilds (Fig. 30, Table 11). These DAHG Booleans incorporated all but four of the mappable unit types. One type (Table 11 Type 19) was mapped only at the stand scale of detail. The other three (Table 11 Types 2, 11, 14) occurred on a small portion of the site and had low-quality habitat support potential. Their exclusion from use in the Booleans indicates a lack of any high habitat function support value for these terrain feature types for the selected Design Animal Habitat Guilds.

The Habitat Pattern Map coverage of the site and by the six DAHGs is non-overlapping. Non-overlapping design area DAHG Habitat Pattern Maps provide necessary locational clarity for vegetation installation and for control over subsequent management and maintenance activities. For example, vegetation plantings are species, location and DAHG specific. That specificity assures that those vegetation species providing the highest habitat function support value for the animals in a particular DAHG will be planted in terrain features and in a spatial pattern most likely to provide habitat functional optimality.

This non overlap among Habitat Pattern Maps neither limits animal movement nor habitat function related uses of any area. Animal fidelity or degree of association design changed from the ranked norms (Fig. 29, Table 10). No overlap among the Habitat Pattern Maps assures that a basis is created at the habitat design stage to install and produce high-value habitat throughout the range of Habitat Pattern Map types that are likely to be used by any given animal species.

Also, a Vegetation Cover Type, Terrain Features and Habitat Decision Unit (VTD Map) (Fig. 31) was prepared. This VTD map is specific for the DAHGs used in a habitat design and is also specific for the issues comprising each DAHG Habitat Pattern Map within the design space VTD Map. It depicts a future condition rather than the current or past status or characteristics of the site.

The design system will develop and mature primarily as a set of vegetation structural units (Fig. 32, Table 12). These will probably superficially appear as fairly typical vegetation cover types although the vegetative species composition will be modified slightly or be of a unique composition that best facilitates achieving the intended design habitat functional optimality. The nomenclature for the VTD Map (Figure 31) best serves to communicate as a mix of conventional and contrived terms. Contrived terms should be both evocative and descriptive of the visual and other experiences of the design spatial units.

For the foregoing reasons the VTD Map legend (Table 12) will usually not have a nomenclatural correspondence to the initial Terrain Features Map List (Fig. 26, Table 9). Decisions made in establishing DAHG content may have altered initial conditions as may have the determination of the DAHG Habitat Pattern Map Booleans. Further changes may occur during VTD Map conformance with design products from the participating professions. In particular the landscape architectural design element should be discussed in determining labels likely to be understood and accepted by the range of professions having areas of responsibility affecting the design outcomes.

Based on the final sort set of conditions best expressing potential for habitat optimality the vegetation species occurring in the region and pertinent to the design space were ranked for their habitat function support value for each DAHG. The three habitat functions having the greatest potential to affect design potential for achieving habitat optimality were summed. The sums were sorted within each DAHG to associate those vegetation species providing the greatest habitat function support value for a DAHG. These highest ranked vegetation species became the Vegetation Planting Palette for the DAHG.

The last step 5 (Fig. 2) concerns deliverables. The VTD Map (Figure 31) and spatial utilisation maps of the other design professions are conformed to each other. The resulting version of the VTD Map is a project deliverable.

The Habitat Supplements Map is indicative and suggestive for the placement of Habitat Supplements in public spaces as a deliverable for this application. Stand scale designs will be added to the site-scale Habitat Supplements map as the stand scale designs are produced. The Habitat Supplements Map becomes a management, maintenance and benchmarking tool.

The Vegetation Planting Palettes (VPP) are DAHG specific. They are a high habitat function support value subset of the vegetation species associated with a DAHG. They can be used for landscaping, aesthetic and other analyses by expanding the categories for analysis and data content of the spreadsheet.

The Habitat Supplements Handbook (Appendix D) provides the design, installation and maintenance guidance required for successful use of Habitat Supplements. A Habitat Spatial Design Unit (HSDU) is DAHG specific. It is a nesting or subsetting of animal species habitat related spatial units. They are used to determine achievable types of space usage for DAHG animal groupings.

The five deliverables or end products from the habitat design process (Figure 2 Step 5) are intended for use by the other design and land-use change related professions.

The DAHG specific Vegetation Planting Palettes are of primary importance for several reasons. First, they can be applied at random without benefit of or adherence to a habitat design. The Vegetation Planting Palettes can be used by individuals for random plantings over a variety of spatial units scales and can still be expected to contribute positively to an increase in habitat value. Second, by its existence and correspondence to major or a primary vegetation structural unity types the Vegetation Planting Palettes can be expected to influence nursery stock composition, sales and use within a region.

## Claims

1. A function-based design method for producing means for directing the optimizing of habitat functionality of a terrain and/or for constructing function-based habitat, which comprises the following combination of steps, performed using animal decision units and the fact that these are structural subunits of a mappable terrain feature type as scale-related design criteria, an animal decision unit being a mappable unit, defining a small discrete space, comprising a feature with a functional content that can prompt an animal action related to an animal obtaining a life requisite or satisfying a related need, according to knowledge based on an in-depth study of the decision-making process performed by animals in their acceptance of portions of a terrain as part of their habitat, habitat being defined as requiring all four of feeding, breeding, nesting and resting opportunities to be present, suitably juxtaposed in time and space for all life stages and for both sexes, operating at or above minimum viable population levels:
1. As a first step preparing an "as is" assessment of a given terrain in terms of:
1.1 using potential components of the terrain and its existing state, including topography, vegetation cover types, or potential therefor, geographic features, soil types, rock types, habitat structures and existing infrastructure, if any,
1.2 Constructing a regional list plus local list of existing:
1.2.1 animal species;
1.2.1 vegetation species; as a basis for what follows
2. As a second step, which may be contemporaneous with 1., reassessing the given terrain on the basis of 1. as regards Its potential habitat design optimization for human enjoyment of nature experience and/or natural habitat restoration, with particular reference to the creation and/or upgrading of habitat conditions for sustaining desirable animal life in terms of the four functions of feeding, breeding, resting and nesting, involving the following:
2.1 Classifying animals for which the terrain can potentially provide viable habitats In terms of habitat guilds, a habitat guild being defined as a group of animals making a similar use of a similar resource and including all habitat resource elements which the particular animals of such habitat guild need for the four habitat functions of feeding, breeding, resting and nesting;
2.2 Selecting from the aforesaid habitat guilds a number of habitat guilds representing in simplified form the animal species populations which the terrain in its optimized form can be made to sustain;
2.3 Mapping the terrain on a scale suitable to show aggregations of "decision unit types" on the basis of which animals make decisions in selecting a space to best satisfy the aforesaid four habitat functions;
3. Organizing animal species as set out in 2.1 into potential Design Animal Habitat Guilds in which each animal habitat guild is associated with/comprised of:
A. A vegetation structural unit that is discernible and mappable by non-biological professionals and contains the design intent-related habitat functions of feeding, breeding, nesting, resting;
B. The one animal guild habitat function best determining the design of optimal habitat for the Design Animal Habitat Guild(s); and further includes
C. Continuing to add potential Design Animal Habitat Guilds until at least one exists for each listed combination of
(i) vegetation structural unit listed in a Terrain Features Map and
(ii) best habitat function determining the design of optimal habitat for the associated combination of animal species comprising the Design Animal Habitat Guild and the associated vegetation structural unit; selecting the Design Animal Habitat Guilds from the animal habitat guilds on the basis of optimal habitat design intent-based combinations of criteria as set out in C. above and
4. preparing on the basis of the aforegoing steps a set of instructions in any physical form enabling an implementer or implementation team to convert the terrain into an upgraded form incorporating habitat design features, determined in accordance with the aforegoing by performing specified procedures, including a procedure selected from the group consisting of installing habitat supplement(s) at identified locality/ies; planting determined plant species at identified locality/ies; distributing seed balls at identified locality/ies; introducing determined live animal species; establishing determined infrastructure at identified locality/ies; adding or modifying topographic features; facilitating rainfall retention; facilitating accumulation of organic matter; and combinations of a plurality of the aforegoing in a subsequent method of function-based habitat construction and/or performing the step of function-based habitat construction.

2. The method as claimed in claim 1, wherein from a list of animals and plants potentially suitable for the terrain of the given project site a list Is prepared of selected animal and plant species of actual interest for inclusion in the function-based habitat design for the project site and on the basis of that latter list a Terrain Features and Habitat Decision Units Features List is compiled, as needed to create and maintain optimal conditions on the site and in the surrounding area in order to meet the habitat criteria on the basis of which the selected animal species, by their natural decision making process, would accept the site, bearing also in mind any surrounding area accessible to the animal species, as a habitat offering feeding, breeding, nesting and resting opportunities, suitably juxtaposed in time and space for all life stages, operating at or above minimum viable population levels;
wherein step 2 of claim 1 includes preparing a Terrain Features and Habitat Decision Units Features Map, depicting features bounding and containing inherent habitat determinants based on landscape and habitat function fundamentals, represented by the Terrain Features and Habitat Decision Units Features List; and
which includes the preparation of Design Animal Habitat Guild Habitat Pattern Maps, which reflects the bases of animals' reaction to landscape features based on determinants of and consequent locations of functional value to such animal(s).

3. The method as claimed in claim 1 or 2, wherein a Design Animal Habitat Guild Requisites Template is prepared for each Design Animal Habitat Guild on the basis of the following design elements: -
(1) Each one or a selection of the animal species comprising the animal habitat guild,
(2) the spatial criteria relating to such animal species' habitat requisites, and
(3) the mappable units containing the habitat functions for such animal species, in which after data for each animal species listed in each Design Animal Habitat Guild Requisites Template have been compiled in the template, a "one line" summary statement of most efficacious or best criteria determining the design of optimal habitat is extracted from the compiled data, which summary statement applies to the entirety of the animal habitat guild and defines the habitat conditions for all animals in the guild in terms of design of optimal habitat conditions achievable having regard to terrain constraints and which summary statement is then used as a Boolean to create Habitat Pattern Maps that are specific to each Design Animal Habitat Guild and wherein the said Booleans are modified, applying best fit principles in order to generate a Design Animal Habitat Guild Habitat Pattern Map in which overlaps of the initial Booleans are eliminated, and wherein preferably for each of one or more selected Design Animal Habitat Guilds a corresponding number of specific Habitat Pattern Maps is created within which the habitat requisites summarized in the Design Animal Habitat Guild Requisite Template are installed until at least threshold conditions for habitat or optimal habitat are reached or exceeded; and wherein preferably the Habitat Pattern Maps are used as templates or patterns for planting vegetation species that are highly ranked for their habitat function support for the selected Design Animal Habitat Guilds, and/or wherein the Habitat Pattern Maps are used as or as a basis for a Habitat Supplements Map for Installing or constructing in the terrain features substituting for missing features of habitat.

4. The method as claimed in any one of claims 1 to 3, performed with the aid of computer software, programmed to perform steps of the method on the basis of data collected regarding the terrain and fed to the software and/or with the aid of a software package combined with one or more instruction manuals in digital and/or written and/or audio form, which, used in combination and with the software loaded into a computer, instructs and guides an operator/implementer or team through the performance of the method as claimed in claim 1 and wherein preferably all essential steps thereof are performed computer-assisted.

5. The method as claimed in claim 4, wherein at least the non-optional features of each of claims 1 to 3 are satisfied.

6. The method as claimed in any one of claims 1 to 5, applied to Function-based Habitat Design and/or construction for a developed or partly developed real estate and/or an open space terrain, which includes:-
A) For a developed or partly developed real estate:
1. Obtaining maps allocating pervious surface and impervious surface space within the Development Area; sharing:
- Infrastructure
- Open space
- Natural areas
- Layouts of property lots
- Landscaping plans - Public spaces
- Landscaping plans - Private ownership
- Landscaping Detailed Design Decision Unit Template
- A Decision Unit Template showing Space Left After Planning (SLAP);
2. Create guilds for habitat function zones and habitat function types that can be expressed as/or incorporate:
- Vegetation cover types
- Landscaping detailed design decision units
- SLAP (Space Left After Planning)
3. Create habitat templates using the habitat attributes of a group of species best characterizing each guild;
4. Develop guild-specific Booleans expressing the relationship in 2 using the habitat attributes in 3 and the pervious surface characterization for the maps in 1;
5. Apply the guild specific Booleans to the maps and to the template data;
6. Test the resulting Functional Habitat Design Polygons against the habitat attributes contained in the Habitat Template for the guild or set of species from the guild;
7. Rubber sheet polygons from template attributes on pervious surface patterns to get area and pattern required for a Function-based Habitat Design for chosen guild.
8. Assign supplements within the polygons to provide missing life requisites;
9. Assign labels to resulting habitat polygons that will promote desired human behaviors:
- plant vegetation best suited to functional support of the theme;
- purchase where support is most likely to be provided;
- increase the sales value of lots; and
10. Revise shapes of habitat polygons to facilitate marketing goals.

7. The method as claimed in any one of claims 1 to 5, applied to Function-based Habitat Design and/or construction for a developed or partly developed real estate and/or an open space terrain, which includes:-
B) for an open space terrain the following steps
1. Map the area using a numerical classifcation system specific to the area (such as United States Geological Survey - USGS; Florida Department of Transportation - FDOT);
2. Create guilds for habitat function zones that can also be expressed as vegetation cover types;
3. Create Habitat Templates using the habitat attributes of a group of species best characterizing each guild;
4. Develop guild specific Booleans expressing the relationship in 2 using the vegetation cover type numerical classification from 1;
5. Apply the guild specific Booleans to the vegetation cover type and land-use map;
6. Test the resulting Functional Habitat Design Polygon against the habitat attributes contained in the Habitat Template for the guild or set of species from the guild;
7. Allow a human habitat requisites Boolean to compete for habitat space to create a human habitat polygon;
8. Test the polygon for animal habitat after the human polygon has been created;
9. Connect fragments where applicable, using Booleans for buffers, connector strips and regulatory compliance;
10. Repeat 6 for this enlarged animal guild habitat polygon;
11. Distinguish between polygons that are functional habitat and those that are not and were not incorporated Into the Functional Habitat Design for the non-human animals;
12. Repeat 9 to incorporate certain of either or both categories of these polygons into non-human habitat;
13. Retain the remaining polygons for use during development habitat planning;
14. Overlay the development layers:
- Infrastructure
- Open space
- Natural areas
- Lot placements
- Landscaping plan - public spaces
- Landscaping plans - private ownership; and
15. Begin Function-based Habitat Design for development space.

8. The method as claimed in any one of claims 1 to 5, applied to Function-based Habitat Design and/or construction for a developed or partly developed real estate and/or an open space terrain, which Includes:-
C) for real estate including both undeveloped open space terrain portions and developed or partly developed terrain portions, includes:-
1. Increasing scale of maps focusing on six types of features:
- Tree canopy pattern at maturity
- Property line pattern at maturity
- Uninterrupted surface hydrology
- Interrupted surface hydrology
- Undevelopable - unplanned area
- SLAP (Space Left After Planning);
2. Examining the conformance of these features to:
- Conventional open Space Functional Habitat Design;
- Developed Space Functional Habitat Design;
3. Making design changes manually/conventionally or computer-assisted;
4. Optimizing economic value from "Green" that is possible at this scale.

9. The method as claimed in any one of claims 1 to 8, including a step of function-based habitat construction by implementing the design features so determined In the terrain being the subject of the function-based habitat design method; wherein habitat supplements as determined by the function-based habitat design method are installed at localities identified by the function-based habitat design method.

10. The method as claimed in any one of claims 1 to 9, wherein plant species as determined by the function-based habitat design method are planted at localities identified by the function-based habitat design method; and/or
seed balls are distributed in localities where specific plant growth is to be procreated, the seed balls being double layer clay balls having an inner core portion, comprising a seed and litter/mycorrhizae mix, the seed being selected as determined by the function-based habitat design method, and an outer layer forming a clay coat protecting the inner core portion until conditions are appropriate for germination.

11. The method as claimed in any one of claims 1 to 10, wherein live animals of species as determined by the function-based habitat design method are introduced into and released in the terrain and wherein preferably live animals of various species are selected, introduced and released so that viable populations representative of each Design Animal Habitat Guild determined by the function-based habitat design method are present in the terrain.

12. The method as claimed in any one of claims 1 to 11, which includes a step of function-based habitat construction, wherein infrastructure is established in the terrain selected and located as identified by the function-based habitat design method, wherein preferably the infrastructure includes roads and /or buildings and/or dams and/or wherein topographic features are added or modified in the terrain as determined by the function-based habitat design method.

13. The method as claimed in claim 12, wherein as part of the construction step closely spaced Vee-shaped depressions are made in soil using a heavy profiled roller implement to facilitate rainfall retention and accumulation of organic matter.

14. A computer-readable medium, e.g. a software package combined with one or more instruction manuals in digital and/or written and/or audio form, which, used in combination and with the software loaded into a computer, instructs and guides an operator/imptementer or team through the performance of the method as claimed in any one of claims 1 to 13.

15. The computer-readable medium as claimed in claim 14 in combination with a computer into which said software is loaded, optionally together with one or more of said instruction manuals.

## Patentansprüche

1. Funktionsbasiertes Designverfahren zur Herstellung von Mitteln zur Optimierung der Habitat-Funktionsfähigkeit eines Geländes und/oder zur Schöpfung von funktionsbasiertem Habitat, welches die folgende Kombination von Schritten beinhaltet, durchgeführt unter Anwendung von Tierentscheidungseinheiten und deren Eigenschaft, dass sie strukturelle Untereinheiten eines kartografierbaren Geländekennzeichentyps darstellen, im Sinne von maßstabsabhängigen Designkriterien, wobei eine Tierentscheidungseinheit eine kartografierbare Einheit ist, die einen kleinen begrenzten Raum definiert mit einem einen Funktionsgehalt beinhaltenden Kennzeichen, welches ein tierisches Verhalten auslösen kann, wodurch ein Tier einen Lebensbedarf erwirbt oder ein entsprechendes Bedürfnis erfüllt, gemäß Erkenntnissen aufgrund tiefschürfender Erforschung des Entscheidungsvorganges von Tieren, welcher deren Billigung von Teilen eines Geländes als Teil ihres Habitats auslöst, wobei Habitat laut Definition die Bedingung erfüllen muss, dass alle vier Gelegenheiten, nämlich zur Ernährung, zur Vermehrung, zum Nisten und zur Rast, zeitlich und räumlich in geeigneter Weise mit einander verbunden für alle Lebensstadien und beide Geschlechter, und wenigstens ausreichend oder mehr als ausreichend für überlebensfähige Bevölkerungszahlen, vorhanden sind:
1. Als erster Schritt, Anfertigung einer Veranschlagung der gegebenen Verhältnisse eines gegebenen Geländes im Sinne von:
1.1 Verwendung ggf. latenter Komponenten des Geländes im gegebenen Zustand, einschließlich Topografie, Vegetationsbewachsungs-Typen oder Voraussetzungen für letztere, geografische Gegebenheiten, Erdreichtypen, Gesteinsarten, Habitat-Strukturen und gegebenenfalls vorhandene Infrastruktur.
1.2 Anfertigung einer regionalen Liste, sowie einer örtlichen Liste vorhandener:
1.2.1 Tierarten;
1.2.2 Pflanzenarten; als Grundlage für Folgendes;
2. Als Zweiter Schritt, der auch gleichzeitig mit 1. stattfinden kann, erneute Veranschlagung des Geländes unter Zugrundelegung von 1. hinsichtlich dessen möglicher Habitat Design Optimierung für den menschlichen Genuss eines Naturerlebens und/oder natürlicher Habitat-Restaurierung, insbesondere hinsichtlich Schöpfung und/oder Aufwertung von Habitat-Bedingungen für die Erhaltung erwünschten Tierlebens im Sinne der vier Funktionen, Ernährung, Vermehrung, Nisten und Rast, einschließlich folgender Maßnahmen:
2.1 Klassifizierung von Tieren, denen das Gelände funktionsfähiges Habitat im Sinne von Habitat-Gilden möglicherweise bieten kann, wobei eine Habitat-Gilde definiert wird als eine Gruppe von Tieren, die eine ähnliche Nutzung einer ähnlichen Ressource ausübt, und alle Habitats-Ressourcen umfassend, welche die jeweiligen Tiere einer solchen Habitat-Gilde für die vier Habitat-Funktionen, Ernährung, Vermehrung, Nisten und Rast benötigen;
2.2 Auswahl einer Anzahl von Habitat-Gilden aus den Obengenannten, die in vereinfachter Weise die Tierartenbevölkerungen wiedergeben, welche das Gelände im optimierten Zustand zu erhalten befähigt werden kann;
2.3 Kartierung des Geländes in einem Maßstab, der Ansammlungen von "Entscheidungseinheitentypen" erkennbar macht, aufgrund derer Tiere sich zu Auswahlen eines Raumes zur bestmöglichen Erfüllung der oben genannten vier Habitat-Funktionen entscheiden.
3. Einordnung von Tierarten gemäß 2.1 im Sinne von möglichen Design-Tierhabitat-Gilden, in denen jede Tierhabitat-Gilde einem der folgenden Elemente zugeordnet oder zugehörend ist:
A. Einer Vegetationsstruktureinheit, die auch für nicht-biologische Fachleute erkennbar und kartografisch festlegbar ist und die die Designabsicht-abhängigen Habitat-Funktionen, Ernährung, Vermehrung, Nisten, Rast beinhaltet;
B. Der herausragenden Tiergildenhabitat-Funktion, die am besten das Design des Tierhabitats für die Design-Tierhabitat-Gilde(n) bestimmt;
und beinhaltet ferner:
C. Weiteres Hinzufügen von möglichen Design-Tierhabitat-Gilden, bis wenigstens eine vertreten ist für jede der aufgezeichneten Kombinationen von
(i) Vegetationsstruktureinheit, die in einer landschaftsbeschreibenden Landkarte verzeichnet ist und
(ii) bester Habitat-Funktion, die das Design für optimales Habitat für die hiermit verbundene, die Design-Tierhabitat-Gilde darstellende Tierartenkombination mit der jeweiligen Vegetationsstruktureinheit ergibt;
Auswahl der Design-Tierhabitat-Gilden aus den gegebenen Tierhabitat-Gilden aufgrund der optimalen auf Habitat-DesignAbsicht basierenden Kombinationen von Kriterien gemäß C. weiter oben, und
4. Anfertigen aufgrund der obengenannten Schritte eines Satzes von Instruktionen in beliebig verkörperter Gestaltung, die es einem Durchführer oder Durchführungsteam ermöglicht, das Gelände in einen aufgebesserten Zustand umzugestalten unter Einverleibung von entsprechend dem oben Gesagten festgelegten Habitat-DesignKennzeichen mittels Durchführung festgelegter Maßnahmen, einschließlich einer Maßnahme, ausgesucht aus der Gruppe bestehend aus Installieren von Habitat-Ergänzungshilfsmittel(n) an festgelegten Orten; Pflanzen festgelegter Pflanzenarten an festgelegten Orten; Auslegung von Saatgutkugeln an festgelegten Orten; Ansiedlung festgelegter lebender Tierarten; Anlegung festgelegter Infrastruktur an festgelegten Orten; Schaffung oder Abänderung von topografischen Strukturen; Förderung von Regenwassereinbehaltung; Förderung der Ansammlung organischen Materials, sowie Kombinationen einer Mehrzahl der Obigen in einem anschließenden funktionsbasierten Habitat-Konstruktionsverfahren bzw. Durchführen des Schrittes einer funktionsbasierten Habitat-Konstruktion.

2. Das gemäß Anspruch 1 beanspruchte Verfahren, worin aus einer Liste von für das gegebene Projekt geeignet erachteten Tieren und Pflanzen eine Liste ausgewählter Tier- und Pflanzenarten von eigentlichem Interesse zur Aufnahme in das funktionsbasierte Design für den Projektstandort angefertigt wird und aufgrund der letzteren Liste eine Liste von Landschaftsmerkmalen und Habitat-Entscheidungseinheiten-Kennzeichen aufgesetzt wird, um dem Bedarf zur Schaffung und Erhaltung von optimalen Bedingungen am Standort und in dessen Umfeld nachzukommen, um die Habitat-Kriterien zu erfüllen, aufgrund derer die erwählten Tierarten mittels ihres naturgegebenen Entscheidungsvorganges den Standort unter Mitberücksichtigung eventueller den Tieren zugänglichen Umfeld-Gebieten als Habitat akzeptieren würden, welches ihnen Gelegenheiten für Ernährung, Vermehrung, Nisten und Rast bietet, zeitlich und räumlich in geeigneter Weise miteinander verbunden für alle Lebensstadien und wenigstens ausreichend oder mehr als ausreichend für überlebensfähige Bevölkerungszahlen;
worin Schritt 2 gemäß Anspruch 1 die Anfertigung einer Landschafts- und Habitat-Entscheidungseinheiten-Kennzeichen beschreibenden Landkarte beinhaltet, worin angrenzende und inhärente Habitat bestimmende Kennzeichen abgebildet sind, basierend auf Landschafts- und Habitat Funktionsgrundlagen, die in der Geländemerkmal- und Habitat-Entscheidungseinheiten-Merkmalliste verzeichnet sind; und
worin Habitat-Musterlandkarten für Design-Tierhabitat-Gilden angefertigt werden, welche die Grundlagen der Reaktion von Tieren auf Landschaftsmerkmale wiedergeben, basiert auf Faktoren und deren Standorten, welche für solche Tier(e) einen funktionellen Wert haben.

3. Das in Anspruch 1 oder 2 beanspruchte Verfahren, worin ein Design-Tierhabitat-Gilde-Requisitenverzeichnis aufgrund der folgenden Designelemente für jede Design-Tierhabitat-Gilde aufgestellt wird: -
(1) Jede einzelne oder eine Auswahl der Tierarten, aus denen die Tierhabitat-Gilde besteht,
(2) die räumlichen Kriterien bezüglich der Habitat-Anforderungen solcher Tiere, und
(3) die kartografisch aufzeichnungsfähigen Einheiten, in denen die Habitat-Funktionen für solche Tierarten enthalten sind, worin, nachdem Daten für jede in jedem Design-Tierhabitat-Gilden-Requisiten-Verzeichnis enthaltene Tierart in der Vorlage zusammengestellt sind, eine "einzeilige" zusammenfassende Aussage über die wirksamsten und besten der das optimale Habitat bestimmenden Kriterien aus den zusammengestellten Daten extrahiert wird, welche zusammenfassende Aussage für die Gesamtheit der Tiergilde gültig ist und die Habitat-Bedingungen für sämtliche Tiere in der Gilde im Sinne des Designs optimal machbarer Habitat-Bedingungen definiert, unter Berücksichtigung von Beschränkungen des Geländes, wonach die zusammenfassende Aussage als Boolesche Aussage für die Anfertigung von Habitat-Musterlandkarten, die spezifisch für die jeweiligen Design-Tierhabitat-Gilden gelten und in denen die genannten Booleschen Aussagen nach "bestpassend" Grundsätzen angepasst werden, so dass eine Design-Tierhabitat-Musterlandkarte geschaffen wird, worin Überlappungen der ursprünglichen Booleschen Aussagen beseitigt werden und worin vorzugsweise für jede der einen oder mehr erwählten Design-Tierhabitat-Gilden eine entsprechende Anzahl spezifischer Habitat-Musterlandkarten geschaffen wird, innerhalb welcher die in dem Design-Tierhabitat-Gilden-Requisiten-Verzeichnis verzeichneten Habitat-Requisiten installiert sind, bis wenigstens Schwellenbedingungen für Habitat oder optimales Habitat erreicht oder übertroffen werden; und worin vorzugsweise die Habitat-Musterlandkarten als Vorlage oder Muster für die Anpflanzung von Pflanzenarten verwendet werden, die hochwertig in ihrer Habitat-Funktionsunterstützung für die erwählten Design-Tierhabitat-Gilden sind, und/oder worin die Habitat-Musterlandkarten als oder als Grundlage für eine Habitat-Ergänzungshilfsmittel-Landkarte für das Installieren oder Konstruieren im Gelände von Gebilden als Ersatz für fehlende Habitat-Gebilde eingesetzt werden.

4. Das in einem der Ansprüche 1 bis 3 beanspruchte Verfahren, durchgeführt mit Hilfe von Computersoftware, die zur Durchführung der Schritte des Verfahrens aufgrund von Daten programmiert wird, die hinsichtlich des Geländes gesammelt und in die Software eingegeben werden und/oder mit Hilfe eines Softwarepakets kombiniert mit einer oder mehreren Betriebsanleitungen in digitaler und/oder schriftlicher und/oder Audioform, welche, angewandt in Kombination und mit der in einem Computer geladenen Software einen Betreiber/Durchführer oder ein Team von solchen durch die Ausübung des Verfahrens gemäß Anspruch 1 anweist und führt und worin vorzugsweise dessen sämtliche obligatorische Schritte mit Computerunterstützung durchgeführt werden.

5. Das in Anspruch 4 beanspruchte Verfahren, worin wenigstens die obligatorischen Schritte eines jeden der Ansprüche 1 bis 3 erfüllt sind.

6. Das in einem beliebigen der Ansprüche 1 bis 5 beanspruchte Verfahren, angewandt auf funktionsbasiertes Habitat Design und/oder Konstruktion für eine entwickelte oder teilentwickelte Liegenschaft und/oder ein offenes Gelände, wobei das Verfahren Folgendes beinhaltet:
A) Für eine entwickelte oder teilentwickelte Liegenschaft:
1. Besorgen von Landkarten, worin durchlässige und undurchlässige Flächen im Entwicklungsgebiet angezeigt sind, unterteilt in:
- Infrastruktur
- Offenes Gebiet
- Natürliche Gebiete
- Anordnungen von Grundstücken
- Landschaftsplanungen - öffentliche Gebiete
- Landschaftsplanungen - Privatbesitz
- Landschaftsgestaltung einer Detaillierten Design-Entscheidungseinheitsvorlage
- Eine Entscheidungseinheitsvorlage, worin nach Planung übrig gebliebener Raum angezeigt ist (engl.: Space Left After Planning - SLAP)
2. Schaffen von Gilden für Habitat-Funktionszonen und Habitat-Funktionstypen, die darstellbar sind als/oder beinhalten:-
- Vegetationsbewachsungstypen
- Landschaftsgestaltung detaillierter Designentscheidungseinheiten
- SLAP (übrig gebliebener Raum)
3. Schaffung von Habitat-Vorlagen unter Einbeziehung der Habitat-Eigenschaften einer Gruppe von Arten, die am besten die jeweilige Gilde kennzeichnen;
4. Entwicklung von gildenspezifischen Booleschen Aussagen, welche die Beziehungen in 2. unter Anwendung der Habitat-Eigenschaften gemäß 3., sowie die Angaben über durchlässige Flächen für die Landkarten in 1. zum Ausdruck bringen;
5. Anwendung der gildenspezifischen Booleschen Aussagen auf die Landkarten und die Daten der Vorlage;
6. Prüfung der sich ergebenden funktionsbasierten Habitat-Designpolygone gegen die in der Habitat-Vorlage für die Gilde oder Artengruppe aus der Gilde enthaltenen Habitat-Eigenschaften;
7. Gummifolienanpassung von Polygonen von Eigenschaften der Vorlage auf durchlässige Flächenmuster zwecks Ermittlung der benötigten Fläche und Flächenformen für ein funktionsbasiertes Habitat Design für die gewählte Gilde;
8. Zuteilung von Ergänzungshilfsmitteln innerhalb der Polygone, um fehlende Lebensnotwendigkeiten zu verschaffen;
9. Zuteilung von Bezeichnungen an die sich ergebenden Habitat-Polygone, welche gewünschtes menschliches Zutun veranlassen:
- Anpflanzung von geeigneter Vegetation zur funktionellen Unterstützung des Themas;
- Ankauf, wo Unterstützung am wahrscheinlichsten geboten wird;
- Erhöhung des Verkaufswertes von Grundstücken; und 10. Revision von Habitat-Polygonen zur Förderung von Vermarktungszielen.

7. Das in einem beliebigen der Ansprüche 1 bis 5 beanspruchte Verfahren, angewandt auf funktionsbasiertes Habitat Design und/oder Konstruktion für eine entwickelte oder teilentwickelte Liegenschaft und/oder offenes Gelände und welches Verfahren Folgendes beinhaltet:-
B) Für ein offenes Gelände die folgenden Schritte
1. Kartieren des Gebietes unter Anwendung eines numerischen für das Gebiet spezifischen Klassifikationssystems (wie z.B. United States Geological Survey - USGS; Florida Department of Transportation - FDOT);
2. Schaffung von Gilden für Habitat-Funktionszonen, die auch als Vegetationsbewachsungstypen bezeichnet werden können;
3. Schaffung von Habitat-Verzeichnissen unter Einbeziehung der Habitat-Eigenschaften einer Gruppe von Arten, die am besten die jeweilige Gilde kennzeichnen;
4. Entwicklung von gildenspezifischen Booleschen Aussagen, welche die Beziehung in 2 unter Anwendung der Vegetationsbewachsungstypen-numerischen Klassifikation aus 1. wiedergeben.
5. Anwendung der gildenspezifischen Booleschen Aussagen auf die Vegetationsbewachsungstypen- und Bodennutzungslandkarte;
6. Prüfung des sich ergebenden funktionsbasierten Habitat-Design-Polygons gegen die in dem Habitat-Verzeichnis für die Gilde oder Artengruppe aus der Gilde enthaltenen Habitat-Eigenschaften;
7. Konkurrieren lassen einer Booleschen Aussage für menschliche Habitat-Bedürfnisse um Habitat-Raum, zwecks Schaffung eines Menschenpolygons;
8. Prüfung des Polygons hinsichtlich Tierhabitat nach Schaffung des Menschenpolygons;
9. Verbindung von eventuellen Bruchstücken mittels Boolescher Aussagen als Puffer, Verbindungsstreifen und Befolgung von Vorschriften;
10. Wiederholung von 6. für dieses vergrößerte Tiergilde-Habitat-Polygon;
11. Differenzierung zwischen solchen Polygons, die funktionsfähiges Habitat darstellen, und solchen, die es nicht sind und die nicht in das funktionsbasierte Habitat Design für nicht-menschliche Tiere einverleibt wurden;
12. Wiederholung von 9., um gewisse Vertreter einer oder beider der Kategorien dieser Polygone in nicht-menschliches Habitat einzuverleiben;
13. Verwahrung der übrigen Polygone zur Verwendung für Entwicklungshabitat-Planung;
14. Aufeinanderschichten der Entwicklungsschichten:
• Infrastruktur
• Offener Raum
• Natürliche Flächen
• Grundstücksflächen
• Landschaftsplanung - öffentliche Gebiete
• Landschaftsplanung - Privatbesitz; und
15. Beginn des funktionsbasierten Habitat Designs für Entwicklungsraum.

8. Das in einem beliebigen der Ansprüche 1 bis 5 beanspruchte Verfahren, angewandt auf funktionsbasiertes Habitat Design und/oder Konstruktion für eine entwickelte oder teilentwickelte Liegenschaft und/oder offenes Gelände, wobei das Verfahren Folgendes beinhaltet: -
C) für eine Liegenschaft, die sowohl unentwickelte, offene Geländeteile, als auch entwickelte oder teilentwickelte Geländeteile beinhaltet, und schließt ein: -
1. Vergrößern des Maßstabs von Landkarten unter Betonung von sechs Kennzeichentypen: -
- Baumkronenbestand im ausgereiften Zustand
- Grundstückbegrenzungsmuster im ausgereiften Zustand
- Ununterbrochene Oberflächenhydrologie
- Unterbrochene Oberflächenhydrologie
- Nicht entwickelbare nicht verplante Fläche
- SLAP (nach Planung übrigbleibender Raum);
2. Untersuchung der Anpassung dieser Kennzeichen an: -
- Herkömmliches funktionsfähiges Habitat Design für offenes Gelände;
- Funktionsfähiges Habitat Design für entwickelten Raum;
3. Anfertigung von Designänderungen, manuell/herkömmlich oder mit Computerhilfe;
4. Optimierung des wirtschaftlichen Wertes auf "grüner Grundlage", den dieser Maßstab ermöglicht.

9. Das in einem beliebigen der Ansprüche 1 bis 8 beanspruchte Verfahren, einschließlich eines funktionsbasierten Habitat-Konstruktionsschrittes durch Ausübung der Designkennzeichen, die so für das Gelände entsprechend des funktionsbasierten Habitat Designverfahrens festgelegt wurden; worin gemäß des funktionsbasierten Habitat Designverfahrens bestimmte Habitat-Ergänzungshilfsmittel an mittels des funktionsbasierten Habitat-Verfahrens festgelegten Orten installiert werden.

10. Das in einem beliebigen der Ansprüche 1 bis 9 beanspruchte Verfahren, worin gemäß des funktionsbasierten Habitat Designverfahrens bestimmte Pflanzenarten an mittels des funktionsbasierten Habitat-Verfahrens festgelegten Orten angepflanzt werden; und/oder
Saatgutkugeln an Orten, wo bestimmter Pflanzenwuchs hervorgebracht werden soll, ausgelegt werden, wobei Saatgutkugeln doppelschichtige Lehmkugeln sind mit einem inneren Kernteil aus einem Saatgut- und Streugut/ Mycorrhizae Gemisch, wobei das Saatgut mittels des funktionsbasierten Habitat Designverfahrens bestimmt wurde, und die Außenschicht eine Lehmumhüllung bildet, die den inneren Kernteil schützt bis geeignete Entkeimungsbedingungen vorliegen.

11. Das in einem beliebigen der Ansprüche 1 bis 10 beanspruchte Verfahren, worin gemäß des funktionsbasierten Habitat Designverfahrens bestimmte Tierarten in das/dem Gelände eingesetzt und freigelassen werden, und worin vorzugsweise lebende Tiere unterschiedlicher Arten ausgesucht, eingesetzt und freigelassen werden, so dass im Gelände überlebensfähige Bevölkerungen als Vertreter jeder der mittels des funktionsbasierten Habitat-Designverfahrens bestimmten Design-Tierhabitat-Gilden vorliegen.

12. Das in einem beliebigen der Ansprüche 1 bis 11 beanspruchte Verfahren, einschließlich eines funktionsbasierten Habitat-Konstruktionsschrittes, worin Infrastruktur im Gelände gemäß einer Auswahl und an Orten, die mittels des funktionsbasierten Habitat Designverfahrens identifiziert wurden, eingerichtet wird, worin die Infrastruktur vorzugsweise Straßen und/oder Gebäude und/oder Staubecken beinhaltet und/oder worin topografische Gestaltungen im Gelände entsprechend Ermittlungen seitens des funktionsbasierten Habitat- Designverfahrens hinzugefügt oder abgeändert werden.

13. Das gemäß Anspruch 12 beanspruchte Verfahren, worin als Teil des Konstruktionsschrittes, mit Hilfe eines schweren, profilierten Walzengerätes zwecks Förderung von Regenwasserspeicherung und Ansammlung organischen Materials, im Erdreich eng aneinander liegende V-förmige Furchen geschaffen werden.

14. Ein computerlesbares Medium, z.B. ein Softwarepaket, kombiniert mit einer oder mehreren Bedienungsanleitungen in digitaler und/oder schriftlicher und/oder Audioform, welche kombiniert angewandt und mit der in einen Computer eingegebenen Software einen Betreiber/Durchführer oder ein Team von diesen durch die Ausübung des in einem beliebigen der Ansprüche 1 bis 13 beanspruchten Verfahrens anweist und führt.

15. Das in Anspruch 14 beanspruchte, computerlesbare Medium in Kombination mit einem Computer, in welchen die Software geladen ist, gegebenenfalls kombiniert mit einer oder mehreren der genannten Bedienungsanleitungen.

## Revendications

1. Procédé de conception fondé sur des fonctions pour la production des moyens destinés à l'optimisation de la fonctionnalité de l'habitat d'un terrain et/ou pour la création d'un habitat fondé sur des fonctions comportant la combinaison suivante d'étapes, réalisées en utilisant des unités de prise de décisions par un animal et le fait que ces dernières représentent des sous-unités structurelles d'un type cartographiable caractérisant un terrain au sens de critères de conception dépendants de l'échelle, une unité de prise de décisions par un animal étant une unité cartographiable définissant un petit espace limité comprenant une caractéristique présentant un continu fonctionnel susceptible de provoquer un comportement animal permettant à un animal d'acquérir une nécessité de la vie ou de répondre à un besoin y relatif, selon des connaissances fondées sur des études approfondies du processus de prise de décisions par des animaux, provoquant leur acceptation des parties d'un terrain comme partie de leur habitat, l'habitat étant défini comme devant répondre à l'exigence que toutes les quatre opportunités, à savoir l'alimentation, la reproduction, la nidification et le repos, soient données, juxtaposées de manière appropriée en termes de temps et d'espace pour tous les stades de la vie et pour les deux sexes et fonctionnant aux niveaux minimums des populations viables ou au-dessus de ceux-ci:
1. Comme première étape, élaboration d'une évaluation de l'état "tel quel" d'un terrain donné en termes de:
1.1 L'utilisation d'éléments potentiels du terrain et de son état actuel, notamment la topographie, les types de couverture végétale, ou le potentiel pour ces derniers, les particularités géographiques, les types de sol, les types de roches, les structures d'habitat et, le cas échéant, l'infrastructure existante.
1.2 L'élaboration d'une liste régionale, aussi bien que d'une liste locale sur l'existence actuelle:
1.2.1 d'espèces animales;
1.2.2 d'espèces végétales; servant de base pour ce qui suit;
2. Comme seconde étape, pouvant être réalisée simultanément avec la première étape, une nouvelle évaluation du terrain donné sur la base de 1. en ce qui concerne son optimisation potentielle de conception d'habitat pour le plaisir humain d'une expérience au coeur de la nature et/ou la restauration de l'habitat naturel, notamment en ce qui concerne la création et/ou la mise à niveau des conditions de l'habitat permettant de soutenir la vie animale souhaitée en termes des quatre exigences, à savoir l'alimentation, la reproduction, la nidification et le repos, y compris les mesures suivantes:
2.1 Classification des animaux, auxquels le terrain peut potentiellement offrir un habitat viable en termes de guildes d'habitat, une guilde d'habitat étant définie comme un groupe d'animaux, utilisant d'une manière similaire une ressource semblable et comportant toutes les ressources relatives à l'habitat dont ont besoin les animaux respectifs d'une telle guilde d'habitat pour les quatre fonctions d'habitat, à savoir alimentation, reproduction, nidification et repos;
2.2 Sélection d'un nombre de guildes d'habitat parmi les guildes d'habitat susmentionnées, représentant, de façon simplifiée, les populations des espèces animales que le terrain peut soutenir dans son état optimisé.
2.3 Cartographie du terrain sur une échelle apte à montrer des agrégations de "types d'unités de prise de décisions", sur la base desquelles les animaux prennent des décisions quant à la sélection de l'espace le mieux adapté pour satisfaire aux quatre fonctions d'habitat susmentionnées;
3. Classification des espèces animales selon 2.1 en termes de Guildes Animales potentielles associées à la Conception d'Habitat, au sein desquelles chaque guilde animale de l'habitat est associée à/ comprend:
A. Une unité structurelle végétale qui est discernable et cartographiable par des professionnels non biologiques et qui contient les fonctions de l'habitat liées à l'intention de la conception, à savoir, l'alimentation, la reproduction, la nidification et le repos.
B. La fonction de l'habitat des guildes animales la plus marquante qui détermine le mieux la conception de l'habitat optimal pour la/les Guilde(s) Animale(s) associée(s) à la Conception d'Habitat;
comprenant en outre:
C. L'ajout d'autres Guildes Animales potentielles associées à la Conception d'Habitat jusqu'à ce qu'au moins une de celles-ci soit représentée pour chacune des combinaisons répertoriées de
(i) L'unité structurelle végétale figurant sur une Carte représentant les Traits Caractéristiques du Terrain et
(ii) La meilleure fonction de l'habitat, déterminant la conception de l'habitat optimal pour la combinaison s'y rapportant des espèces animales comprenant la Guilde Animale associée à la Conception d'Habitat, et de l'unité structurelle végétale y afférente;
La sélection des Guildes Animales associées à la Conception d'Habitat parmi les guildes animales associées à l'habitat en vertu des combinaisons optimales de critères sur la base de l'intention de la conception de l'habitat selon C. ci-dessus et
4. Élaboration d'un ensemble d'instructions sur la base des étapes mentionnées ci-dessus sous une forme physique quelconque permettant à l'exécutant ou à l'équipe d'exécution de convertir le terrain en un état amélioré intégrant les caractéristiques de conception d'habitat déterminées conformément à ce qui précède en exécutant des procédures particulières, y compris une procédure sélectionnée dans le groupe consistant en mettant en place un/des supplément(s) d'habitat sur un/des site(s) désigné(s); en plantant des espèces végétales dans un/des endroit(s) désigné(s); en étalant des boules de semences sur un/des site(s) désigné(s); en introduisant des espèces animales vivantes; en établissant une infrastructure déterminée au lieu/aux lieux désigné(s); en ajoutant ou modifiant des caractéristiques topographiques; en facilitant la rétention de l'eau de pluie; en facilitant l'accumulation de matières organiques; et des combinaisons d'une pluralité de ce qui précède dans un procédé ultérieur de construction d'habitat fondé sur des fonctions et/ou la réalisation de l'étape de construction d'habitat fondé sur des fonctions.

2. Le procédé selon la revendication 1, dans lequel, à partir d'une liste d'animaux et de plantes potentiellement adaptés au terrain du site du projet donné, une liste d'espèces animales et végétales sélectionnées d'intérêt réel est élaborée pour être inclue dans la conception d'habitat fondé sur des fonctions pour le site du projet et, sur la base de cette dernière, une Liste des Caractéristiques du Terrain et des Caractéristiques des Unités de Prise de Décisions à l'égard de l'Habitat est compilée, au besoin, pour créer et maintenir des conditions optimales du site et dans la région avoisinante afin de répondre aux critères d'habitat sur la base desquels les espèces animales sélectionnées, en raison de leur processus de prise de décision naturel, seraient amenées à accepter le site, gardant également à l'esprit toute région avoisinante accessible aux espèces animales en tant qu'habitat offrant l'alimentation, la reproduction, la nidification et le repos, juxtaposées de manière appropriée en termes de temps et d'espace pour tous les stades de la vie et fonctionnant aux niveaux minimums des populations viables ou au-dessus de ceux-ci;
dans lequel l'étape 2 de la revendication 1 comprend l'élaboration d'une Carte des Caractéristiques du Terrain et des Caractéristiques des Unités de Prise de Décisions à l'égard de l'Habitat, décrivant les caractéristiques délimitant et contenant des déterminants inhérents de l'habitat sur la base des principes de fonction du paysage et de l'habitat, représentés par la Liste des Caractéristiques du Terrain et des Caractéristiques des Unités de Prise de Décisions à l'égard de l'Habitat; et
lequel comprend l'élaboration de Cartes de Configuration d'Habitat pour les Guildes Animales associées à la Conception d'Habitat, reflétant les principes de réaction des animaux aux caractéristiques du paysage, fondée sur des facteurs déterminants et les locaux qui en découlent, représentant une valeur pour cet animal/ces animaux.

3. Le procédé selon la revendication 1 ou 2, dans lequel un Modèle *[template en anglais]* d'Exigences concernant la Guilde Animale associée à la Conception d'Habitat est élaboré pour chaque Guilde Animale associée à la Conception d'Habitat sur la base des éléments de conception suivants: -
(1) Chacune ou une sélection des espèces animales représentant la guilde animale de l'habitat,
(2) les critères spatiaux se rapportant aux exigences d'habitat de ces espèces d'animaux, et
(3) les unités cartographiables contenant les fonctions d'habitat pour ces espèces d'animaux, dans lesquelles, après que des données pour chaque espèce animale répertoriée dans chaque Modèle d'Exigences concernant la Guilde Animale associée à la Conception d'Habitat aient été compilées dans le modèle, un énoncé sommaire "ligne unique" concernant les meilleurs critères ou les critères les plus efficaces déterminant la conception de l'habitat optimal est extrait des données compilées, lequel énoncé sommaire s'applique à l'ensemble de la guilde animale de l'habitat définissant les conditions d'habitat pour tous les animaux dans la guilde en termes de conception de conditions d'habitat optimales réalisables ayant égard aux contraintes posées par le terrain et lequel énoncé sommaire est ensuite utilisé comme proposition Booléenne pour créer des Cartes de Configuration d'Habitat qui s'appliquent spécifiquement à chacune des Guildes Animales associée à la Conception d'Habitat et dans lesquelles lesdites propositions Booléennes sont modifiées par l'application des principes fournissant la meilleure solution possible de manière à créer une Carte de Configuration d'Habitat concernant la Guilde Animale associée à la Conception d'Habitat dans laquelle des chevauchements des propositions Booléennes d'origine sont éliminés, et dans lesquelles, de préférence, pour chacune d'une ou d'une pluralité de Guildes Animales sélectionnées associées à la Conception d'Habitat un nombre correspondant de Cartes de Configuration d'Habitat particulières est créé au sein desquelles les exigences d'habitat, résumées dans le Modèle d'Exigences concernant la Guilde Animale associée à la Conception d'Habitat, sont installées jusqu'à ce qu'au moins des conditions de seuil pour un habitat ou un habitat optimal soient atteintes ou dépassées; et dans lesquelles, de préférence, les Cartes de Configuration d'Habitat sont utilisées comme modèles ou configurations pour planter des espèces végétales qui se classent à un niveau très élevé dans leur fonction de soutien de l'habitat pour les Guildes Animales sélectionnées associées à la Conception d'Habitat, et/ou dans lesquelles les Cartes de Configuration d'Habitat sont utilisées en tant que, ou comme base pour une Carte de Moyens Auxiliaires Supplémentaires concernant l'Habitat destinée à l'installation ou la construction de structures dans le terrain en remplacement des structures d'habitat absentes.

4. Le procédé selon l'une quelconque des revendications 1 à 3, réalisé avec l'aide d'un logiciel informatique programmé de manière à réaliser les étapes du procédé sur la base de données recueillies par rapport au terrain et transférées dans le logiciel et/ou avec l'aide d'un progiciel en combinaison avec un ou plusieurs manuels d'utilisation sous forme numérique et/ou écrite et/ou sonore, qui, en l'utilisant en combinaison avec le logiciel chargé dans un ordinateur, instruit et guide un opérateur/exécutant ou une équipe de ces derniers à travers la réalisation du procédé selon la revendication 1, et dans lequel, de préférence, toutes ses étapes essentielles sont réalisées avec l'assistance par ordinateur.

5. Le procédé selon la revendication 4, dans lequel au moins les caractéristiques obligatoires de chacune des revendications 1 à 3 sont respectées.

6. Le procédé selon l'une quelconque des revendications 1 à 5, appliqué à la Conception d'Habitat Fondé sur des Fonctions et/ou la construction pour un bien immobilier développé ou partiellement développé et/ou un terrain ouvert, consistant à:-
A) Pour un bien immobilier développé ou partiellement développé:
1. Obtenir des cartes affichant les surfaces perméables et imperméables dans la Région de Développement; partageant:
- Infrastructure
- Espaces ouverts
- Espaces naturels
- Disposition des lots de terrain
- Plans d'aménagement paysager - espaces publiques
- Plans d'aménagement paysager - propriétés privées
- Modèle d'Unité Décisionnelle de Conception Détaillée relatif à l'Aménagement paysager
- Modèle d'Unité Décisionnelle affichant l'Espace Restant Après Planification (en anglais: Space Left After Planning - SLAP);
2. Créer des guildes pour des zones fonctionnelles d'habitat et des types fonctionnels d'habitat pouvant être représentés comme/ou intégrant:
- Types de couverture végétale
- Unités décisionnelles de conception détaillée relatives à l'aménagement paysager
- SLAP (Espace Restant Après Planification)
3. Créer des modèles d'habitat en utilisant les caractéristiques d'habitat d'un groupe d'espèces caractérisant le mieux chaque guilde;
4. Développer des propositions Booléennes relatives à la guilde, exprimant le rapport selon 2. en utilisant les caractéristiques d'habitat selon 3., aussi bien que la caractérisation des surfaces perméables pour les cartes selon 1.;
5. Appliquer les propositions Booléennes relatives à la guilde aux cartes et aux données du modèle;
6. Examiner les Polygones de la Conception d'Habitat Fondé sur des Fonctions en résultant par rapport aux caractéristiques d'habitat contenues dans le Modèle d'Habitat pour la guilde ou un groupe d'espèces de la guilde;
7. Polygones en feuilles de caoutchouc à partir des caractéristiques du modèle selon les configurations de surfaces perméables pour arriver au terrain et à la configuration exigés pour une Conception d'Habitat Fondé sur des Fonctions pour la guilde choisie;
8. Assigner aux polygones des moyens auxiliaires supplémentaires afin de fournir les exigences de vie manquantes;
9. Affecter aux polygones d'habitat en résultant les libellés qui seront amenées à promouvoir des comportements humains souhaités:
- Plantation de végétation qui convient le mieux au soutien fonctionnel du sujet;
- Achat, là où du soutien est fort probablement apporté;
- Augmentation de la valeur de vente de lots de terrain; et
10. Réviser les formes des polygones d'habitat pour faciliter les objectifs en matière de marketing.

7. Procédé selon l'une quelconque des revendications 1 à 5, appliqué à la Conception d'Habitat Fondé sur des Fonctions et/ou la construction pour un bien immobilier développé ou partiellement développé et/ou un terrain ouvert, comprenant:-
B) Pour un terrain ouvert, les étapes suivantes consistant à
1. Cartographier la région en utilisant un système de classification numérique spécifique à la région (par exemple United States Geological Survey - USGS; Florida Department of Transportation - FDOT);
2. Créer des guildes pour les zones d'habitat fonctionnelles pouvant également être exprimées comme types de couverture végétale;
3. Créer des Modèles d'Habitat en faisant appel aux caractéristiques de l'habitat d'un groupe d'espèces qui caractérisent le mieux chaque guilde;
4. Développer des propositions Booléennes, particulières à la guilde, exprimant le rapport selon 2. en utilisant la classification numérique se rapportant aux types de couverture végétale selon 1.;
5. Appliquer les propositions Booléennes, particulières à la guilde, à la carte se rapportant au type de couverture végétale et à l'utilisation des terres;
6. Examiner les Polygones de la Conception d'Habitat Fondé sur des Fonctions en résultant par rapport aux caractéristiques de l'habitat contenues dans le Modèle d'Habitat pour la guilde ou un groupe d'espèces de la guilde;
7. Permettre à une proposition Booléenne en termes d'exigences d'habitat humain de concourir pour un espace habitat afin de créer un polygone d'habitat humain;
8. Examiner le polygone à l'égard de l'habitat animal après création du polygone humain;
9. Relier les éventuels fragments en utilisant des propositions Booléennes servant de tampons, des bandes de connexion et le respect des exigences réglementaires;
10. Répéter 6. pour ce polygone élargi destiné à l'habitat de guilde animale;
11. Distinguer entre les polygones représentant un habitat fonctionnel et ceux qui ne représentent pas un tel habitat fonctionnel et n'étaient pas intégrés dans la Conception d'Habitat Fondé sur des Fonctions pour les animaux non humains;
12. Répéter 9. afin d'intégrer certains-uns d'une ou de toutes les deux catégories de ces polygones dans un habitat non humain;
13. Conserver les polygones restants pour une utilisation au cours de la planification du développement de l'habitat;
14. Juxtaposer les couches de développement:
• Infrastructure
• Espace ouvert
• Zones naturelles
• Emplacement des lots de terrain
• Plan d'aménagement paysager - espaces publiques
• Plans d'aménagement paysager - propriétés privées
15. Démarrer la Conception d'Habitat Fondé sur des Fonctions pour l'espace de développement.

8. Procédé selon l'une quelconque des revendications 1 à 5, appliqué à la Conception d'Habitat Fondé sur des Fonctions et/ou la construction pour un bien immobilier développé ou partiellement développé et/ou un terrain ouvert, ledit procédé comprenant:-
C) pour un bien immobilier comprenant à la fois des parties de terrain ouvert non développées et des parties de terrain développées ou partiellement développées, les étapes consistant à:-
1. Accroître l'échelle des cartes mettant l'accent sur six types de caractéristiques:
- Système de canopée arborescente en pleine maturité
- Structure de limites de propriété en pleine maturité
- Hydrologie de surface sans interruption
- Hydrologie de surface interrompue
- Zone non exploitable - non planifiée
- SLAP (Espace Restant Après Planification);
2. Examiner la conformité de ces caractéristiques avec:
- Une Conception d'Habitat Fonctionnel classique pour un Espace ouvert;
- Une Conception d'Habitat Fonctionnel pour un Espace Développé;
3. Apporter des modifications à la conception manuellement/conventionnellement ou à l'aide d'un ordinateur;
4. Optimiser la valeur économique sur " base verte" rendue possible à cette échelle.

9. Procédé selon l'une quelconque des revendications 1 à 8, comprenant une étape de construction d'habitat fondé sur des fonctions en mettant en oeuvre les caractéristiques de la conception ainsi déterminées pour le terrain faisant l'objet du procédé de conception d'habitat fondé sur des fonctions; dans lequel certains moyens auxiliaires supplémentaires relatifs à l'habitat tels que déterminés par le procédé de conception d'habitat fondé sur des fonctions sont installés dans des endroits identifiés par le procédé de conception d'habitat fondé sur des fonctions.

10. Procédé selon l'une quelconque des revendications 1 à 9, dans lequel des espèces végétales telles que déterminées par le procédé de conception d'habitat fondé sur des fonctions sont plantées dans des endroits identifiés par le procédé de conception d'habitat fondé sur des fonctions; et/ou
des boules de semences sont plantées dans des endroits où l'on s'attend à ce qu'une croissance des plantes particulière soit engendrée, les boules de semences étant des boules en argile à deux couches, comportant une partie de noyau interne comprenant un mélange de semence et de matériau d'épandage/mycorhizes, la semence étant choisie telle que déterminée par le procédé de conception d'habitat fondé sur des fonctions; et une couche externe formant une couche d'argile protégeant la partie de noyau interne jusqu'à ce que des conditions adéquates soient assurées pour la germination.

11. Procédé selon l'une quelconque des revendications 1 à 10, dans lequel les animaux vivants des espèces telles que déterminées par le procédé de conception d'habitat fondé sur des fonctions sont introduits et libérés dans le terrain, et dans lequel, de préférence, des animaux vivants de diverses espèces sont sélectionnés, introduits et libérés de sorte que des populations viables représentant chaque Guilde Animale de Conception d'Habitat déterminée par le procédé de conception d'habitat fondé sur des fonctions soit représentée sur le terrain.

12. Procédé selon l'une quelconque des revendications 1 à 11, comprenant une étape de construction d'un habitat fondé sur des fonctions, dans laquelle une infrastructure est établie dans le terrain, choisie et située telle qu'identifiée par le procédé de conception d'habitat fondé sur des fonctions, ladite infrastructure comportant, de préférence, des routes et/ou des bâtiments et/ou des barrages et/ou dans laquelle des éléments topographiques sont ajoutés ou modifiés dans le terrain tels que déterminés par le procédé de conception d'habitat fondé sur des fonctions.

13. Procédé selon la revendication 12, dans lequel, dans le cadre de l'étape de construction, des sillons en forme de V très rapprochés sont pratiqués dans la terre en faisant appel à un outil sous forme de rouleau lourd profilé pour faciliter la rétention de l'eau de pluie et l'accumulation de matières organiques.

14. Un support lisible par ordinateur, un progiciel, par exemple, en combinaison avec un ou plusieurs manuels d'utilisation sous forme numérique et/ou écrite et/ou sonore, qui, en l'utilisant en combinaison avec le logiciel chargé dans un ordinateur, instruit et guide un opérateur/exécutant ou une équipe de ces derniers à travers la réalisation du procédé selon l'une quelconque des revendications 1 à 13.

15. Le support lisible par ordinateur selon la revendication 14 en combinaison avec un ordinateur dans lequel est chargé ledit logiciel, facultativement conjointement avec un ou plusieurs desdits manuels d'utilisation.
